# EUROPEAN PATENT APPLICATION

(11) **EP 4 311 807 A1**
(43) Date of publication of application: **31.01.2024**
(21) Application number: 22186635.3
(22) Date of filing: 25.07.2022
(51) Int. Cl.: C01B 17/69, B01D 53/48, C01B 3/00, C01B 17/88, C01B 17/90, C25B 1/24

(54) **A PROCESS FOR REMOVING SULFUR CONTAINING COMPOUNDS FROM GAS CONTAINING AT LEAST ONE SULFUR CONTAINING COMPOUND**

(71) Applicant: Sulzer Management AG, 8401 Winterthur (CH)
(72) Inventor: NESTERENKO, Nikolay, 8400 Winterthur (CH); SANTOS, Miguel Alexandre Figueiredo, Sugar Land, Texas 77479 (US); ZHOU, Jingsong, Houston, Texas 77056 (US)
(74) Representative: Henkel & Partner mbB

(57) **Abstract**

A process for removing at least a sulfur containing compound from gas containing at least one sulfur containing compound, wherein the process comprises the following steps:
a) contacting a gas stream containing at least one sulfur containing compound with a stream containing bromine and water so as to obtain a starting stream,
b) reacting the starting stream provided in step a) so as to produce a reaction mixture effluent comprising sulfuric acid and hydrogen bromide,
c) separating the reaction mixture effluent obtained in step b) into one or more hydrogen bromide enriched compositions and into one or more sulfuric acid enriched compositions,
d) subjecting at least a portion of the at least one hydrogen bromide enriched composition obtained in step c) to a treatment, in which at least a portion of the hydrogen bromide enriched composition is converted to bromine,
e) recycling at least a portion of the bromine containing composition obtained in step d) back to step a), and
f) withdrawing gas, which is depleted in the at least one sulfur containing compound.

## Description

The present invention relates to a process and to a plant for removing at least one sulfur containing compound from gas containing at least one sulfur containing compound.

The removal of non-hydrocarbon components and in particular of sulfur containing compounds from hydrocarbon-based gases, which is also called gas sweetening, is an important part of the gas treatment, because such non-hydrocarbon components and in particular sulfur containing compounds may severely disturb downstream applications. For instance, natural gas must be purified, before it is liquefied, sold or transported to a commercial gas pipeline due to the toxicity of compounds, such as hydrogen sulfide, contained therein and due to corrosion-forming components contained therein. Prominent examples of disturbing non-hydrocarbon components and in particular of sulfur containing (non-hydrocarbon) compounds are acid gases, such as hydrogen sulfide and carbon dioxide, along with other sulfur species, such as mercaptans, organic sulfides and carbonyl sulfide. Hydrogen sulfide is highly toxic and forms in the presence of small amounts of water weak corrosive acid that can firstly lead to corrosion and later rupture and fire in pipelines. Separation of methane from other major components contributes to significant savings in the transport of raw materials over long distances as well as saves from technical difficulties, such as corrosion and potential pipeline rupture. Moreover, natural gas processing projects are facing increasing challenges due to stringent sales gas specifications and increasingly impure natural gas as well as increasing demands for renewable natural gases. Many natural gas resources do not contain harmfully large amounts of hydrogen sulfide, but contain significant amounts of carbon dioxide.

The removal of carbon dioxide from natural gas in the presence of hydrogen sulfide, carbonyl sulfide and mercaptans is a challenge. The conventional amine absorption methods are not suitable for natural gases containing substantial amounts of carbon dioxide in presence of sulfide, carbonyl sulfide and mercaptans. It requires hybrid solvents, such, for example, as a mixture of chemical and physical solvents, and increases the energy consumption due to higher temperature for amine regeneration. Moreover, the extracted carbon dioxide stream may still need to respond the very stringent specification of at most 4 ppm of hydrogen sulfide, which remains often challenging to achieve in a single step with membranes or amine and may require a polishing sorption step. On the other hand, the hydrogen enriched carbon dioxide streams produced thereby require a further conversion step to sulfur. This is typically done in a Claus unit. The utilization of a Claus unit is well established, but is only feasible at a mega-scale. Most of the renewable gas projects cannot afford this type of the treatment and require for sulfur removal alternative techniques, which are very expensive. These options could be based on adsorption on activated carbon, on iron oxides, on zinc oxide and the like. In addition, all of the used processes to remove sulfur from biogas suffer from extremely high costs and from a significant number of wastes being produced thereby. Furthermore, the presence of sulfur in many forms often adds more challenges to the technologies. Sometime, thereby the whole gas processing section becomes much more expensive and depend a lot on the amount of sulfur present at ppm level.

All in all, the known processes for removing sulfur containing compound(s) from gas containing at least one sulfur containing compound are expensive and consume a lot of energy, which results in additional carbon dioxide emissions.

In view of this, the object underlying the present invention is to provide a process for removing at least one sulfur containing compound from gas containing at least one sulfur containing compound in an industrial scale, wherein the process may be performed with a one-step separation and transformation of the sulfur containing compound to a marketable sulfuric acid product stream, and wherein the process is less expensive, consumes less energy and results in less carbon dioxide emissions in comparison to the known respective gas treatment processes.

In accordance with the present invention, this object is solved by providing a process for removing at least one sulfur containing compound from gas containing at least one sulfur containing compound, wherein the process comprises the following steps:
a) contacting a gas stream containing at least one sulfur containing compound with a stream containing bromine and water so as to obtain a starting stream,
b) reacting the starting stream provided in step a) so as to produce a reaction mixture effluent comprising sulfuric acid and hydrogen bromide,
c) separating the reaction mixture effluent obtained in step b) into one or more hydrogen bromide enriched compositions and into one or more sulfuric acid enriched compositions,
d) subjecting at least a portion of the at least one hydrogen bromide enriched composition obtained in step c) to a treatment, in which at least a portion of the hydrogen bromide enriched composition is converted to bromine,
e) recycling at least a portion of the bromine containing composition obtained in step d) back to step a), and
f) withdrawing gas, which is depleted in the at least one sulfur containing compound.

This process bases on the discovery that the reactive separation of sulfur containing compounds from gas streams via bromine-mediated oxidation in aqueous medium allows a selective one-pot removal of all the types of sulfur compounds from the gas stream, while additionally monetizing the sulfur in form of pure sulfuric acid, which is a very valuable chemical product. Thus, the process in accordance with the present invention substitutes the known sulfur separation processes from gas, such as natural gas, as well as the sulfur transformation to sulfuric acid in a single step. Furthermore, the process in accordance with the present invention leads in a cost-efficient as well as energy-efficient manner to a reliably high removal of sulfur containing compound(s) from gas containing at least one sulfur containing compound in an industrial scale without producing any or at least without producing notable amounts of carbon dioxide emissions. More specifically, the reaction of bromine, water and sulfur containing compound(s), such as elemental sulfur or hydrogen sulfide, to sulfuric acid and hydrogen bromide in step b) is exothermic and the energy won thereby may be used for significantly reducing the required amount of external energy for the overall gas treatment process, which may be utilizing in step d) a hydrogen bromide electrolysis or a thermal oxidation of hydrogen bromide to bromine. In addition, the separation step c) separating the reaction mixture effluent, which contains hydrogen bromide and sulfuric acid typically together with unreacted water and bromine and other impurities resulting from the source of the sulfur containing gas, into one or more hydrogen bromide enriched compositions and into one or more sulfuric acid enriched compositions, wherein preferably at least one hydrogen bromide enriched composition contains at most 1,000 ppm and most preferably at most 10 ppm of sulfuric acid, allows to subject such a sulfuric acid-depleted hydrogen bromide composition to the treatment, in particular hydrogen bromide electrolysis, in step d) that the electrolysis cell and in particular the membrane and the electrodes are reliably protected against deterioration, thus leading to a long lifetime of the electrolysis cell. Such a deterioration of the electrolysis cell may be caused by the presence of sulfuric acid and also of products of the transformation of sulfuric acid in the electrolysis cell, e.g. the transformation to elemental sulfur. Those products, such as e.g. elemental sulfur, can be also present due to non-complete oxidation of S-species in the reaction mixture effluent in step b). Often, the reaction of a S-containing compound may result in presence of some impurities of individual sulfur in step b), which are highly undesirable. Therefore, the separation in step c) to reduce dramatically the concentration of sulfuric acid in the HBr stream is important to protect the performance of the electrolysis cell.

Furthermore, the generation of the one or more sulfuric acid enriched compositions in step c) allows to produce in an easy and cost-efficient manner very pure sulfuric acid having a sulfuric acid concentration of up to 95% by weight, which may be commercially sold and thus further reduces the total costs of the process in accordance with the present invention. Moreover, the separation of the reaction mixture effluent containing hydrogen bromide and sulfuric acid typically together with unreacted water and bromine and other impurities resulting from the source of the sulfur containing gas into one or more hydrogen bromide enriched compositions and into one or more sulfuric acid enriched compositions concentrates the water in the one or more sulfuric acid enriched compositions and thus allows to easily remove pure and in particular hydrogen bromide-free water from the one or more sulfuric acid enriched compositions. This pure and in particular hydrogen bromide-free water may be easily purged from the process due to its purity, thus reliably and efficiently allowing to avoid water accumulation in the continuous process. Moreover, the separation of the reaction mixture effluent into one or more hydrogen bromide enriched compositions and into one or more sulfuric acid enriched compositions allows to recycle a portion of the one or more hydrogen bromide enriched compositions back into the starting stream, such assuring in a simple and efficient manner that the starting stream is a single-phase liquid mixture comprising enough hydrogen bromide so that a separation of bromide and water into two phases is reliably avoided in the reaction mixture. In addition, the generation of one or more sulfuric acid enriched compositions allows by simply recycling a portion of the one or more sulfuric acid enriched compositions to the liquid part of the reaction mixture obtained in step b) to adjust a sufficiently high amount of sulfuric acid in the mixture, which breaks the hydrogen bromide-water azeotrope in the mixture. This allows to easily and efficiently separate by a subsequent distillation step a gaseous hydrogen bromide enriched composition having a comparable low water content from a liquid sulfuric acid- and water-enriched composition so that the gaseous hydrogen bromide enriched composition may be used directly in the treatment of step d), such as an electrolysis step or a thermal oxidation step. For instance, a gaseous electrolysis is more energy efficient than an electrolysis with an aqueous solution, in which hydrogen bromide is dissolved in water. All in all, the process in accordance with the present invention leads in a cost-efficient as well as energy-efficient manner to a reliably high removal of sulfur containing compound(s) from gas containing at least one sulfur containing compound in an industrial scale without producing any or at least without producing notable amounts of carbon dioxide emissions, wherein the process may be performed with a one-step separation and transformation of the sulfur containing compound to a marketable sulfuric acid product stream.

In principle, the present invention is not particularly limited concerning the kind of sulfur containing compound contained in the gas in step a), as long as it may react with bromine and optionally water to sulfuric acid. Therefore, it is not important, whether the sulfur containing compound contained in the gas is reacted in step b) to sulfuric acid by oxidizing the sulfur atom, by reducing the sulfur atom or by not changing the oxidation state of the sulfur atom. According to one alternative, the sulfur containing compound used in step a) is oxidizable to sulfuric acid. Good results are in particular obtained, when the sulfur containing compound is selected from the group consisting of sulfur, sulfides, disulfides, thiophenes, thiols and arbitrary combinations of two or more of the aforementioned compounds. More preferably the sulfur containing compound is selected from the group consisting of hydrogen sulfide, sulfur, sulfur dioxide, carbon disulfide, carbonyl sulfide, methanethiol and arbitrary combinations of two or more of the aforementioned compounds. A particularly preferred example for the sulfur containing compound contained in the gas used in step a) is hydrogen sulfide.

Exemplarily, the reaction of some of the above-mentioned sulfur containing compounds with bromine and water in step b) are shown:

H2S + 4 Br₂ + 4 H₂O → 8 HBr + H₂SO₄

S + 3 Br₂ + 4 H₂O -> 6 HBr + H₂SO₄

SO₂ + Br₂ + 2 H₂O → 2 HBr + H₂SO₄

CS₂ + 4 Br₂ + 10 H₂O -> 8 HBr + 2 H₂SO₄ + CO₂

2 COS + 4 Br₂ + 10 H₂O → 8 HBr + 2 H₂SO₄ +2CO₂

In accordance with the present invention, the starting stream provided in step a) contains bromine, water and a sulfur containing compound. Of course, the presence of further compounds is not excluded. On the contrary, it is preferred that the starting stream provided in step a) additionally contains hydrogen bromide. This is preferred, in order to enable in step b) a single-phase liquid reaction mixture. Binary systems of bromine and water are - except for very low bromine contents - two-phase systems, whereas ternary mixtures of bromine, water and hydrogen bromine are above a certain hydrogen bromide concentration (of for example 5% by weight), which depends on the relative amounts of bromine and water, single-phase liquid mixtures. At and above a hydrogen bromide concentration of 11% by weight or 12% by weight, all ternary mixtures of bromine, hydrogen bromide and water are single-phase liquid mixtures. Therefore, it is preferred that the starting stream a) contains a respectfully high amount of hydrogen bromide.

More specifically, it is preferred that the starting stream contains at least 5% by weight, more preferably 11 to 46% by weight and most preferably 12 to 46% by weight of hydrogen bromide based on the total weight of bromine, hydrogen bromide and water in the liquid phase of the starting stream, if the starting stream is at the reaction temperature and reaction pressure of step b) a gas-liquid mixture. If the starting stream is at the reaction temperature and reaction pressure of step b) a liquid, it is preferred that the starting stream contains at least 5% by weight, preferably 11 to 46% by weight and most preferably 12 to 46% by weight of hydrogen bromide based on the total weight of bromine, hydrogen bromide and water in the starting stream. The 5% by weight concentration of hydrogen bromide leads to a single-phase liquid mixture at least for low and high amounts of bromine in relation to that of water. However, as set out above a hydrogen bromide concentration of at least 11% by weight or of at least 12% by weight leads for every amount of bromine in relation to that of water to a single-phase liquid mixture.

Preferably, the starting stream comprises at least 5% by weight, preferably 11 to 46% by weight and most preferably 12 to 46% by weight of hydrogen bromide, at least 1% by weight and preferably 2 to 35% by weight of bromine and 40 to 75% by weight of water based on the total weight of water, bromine and hydrogen bromide in the liquid phase of the starting stream, if the starting stream is at the reaction temperature and reaction pressure a gas-liquid mixture. If the starting stream is at the reaction temperature and reaction pressure a liquid, it is preferred that the starting stream comprises at least 5% by weight, preferably 11 to 46% by weight and most preferably 12 to 46% by weight of hydrogen bromide, at least 1% by weight and preferably 2 to 35% by weight of bromine and 30 to 75% by weight of water based on the total weight of bromine, hydrogen bromide and water in the starting stream.

In order to effect the hydrogen bromide addition into the starting stream in an easy and cost-efficient manner, it is suggested in a further development of the idea of the present invention that the process in accordance with the present invention further comprises a step of recycling at least a portion of hydrogen bromide contained in one of the one or more hydrogen bromide enriched compositions produced in step c) to step a), wherein the recycled hydrogen bromide has not been subjected to the treatment of step d). Thereby, the supply of external hydrogen bromide to the starting stream in step a) is not required, thus further decreasing the total costs of the process and effecting a particular efficient utilization of the hydrogen bromide formed in the reaction of step b). A further advantage of using recycled hydrogen bromide being not subjected to the treatment of step d) in the starting stream, i.e. by using recycled hydrogen bromide which has bypassed the treatment, such as electrolysis or thermal oxidation, of step d) in the starting stream, is that only a part of the hydrogen bromide being obtained in step b) needs to be sent to the treatment of step d) for the production of bromine and that for instance in the case of an aqueous hydrogen bromide electrolysis an addition of more water to the electrolysis of step d) is avoided, which both leads to significant energy savings of the process.

At standard pressure and temperature conditions, hydrogen bromide forms a mixture of azeotropic composition with water. At those conditions the relative amount of hydrogen bromide relative to the hydrogen bromide-water mixture is about 47% by weight. An important aspect of the process in accordance with the present invention is the ability to adjust the hydrogen bromide-water azeotrope composition or to break the azeotrope completely, if desired and depending on the embodiment. For this purpose, increasing amounts of sulfuric acid can be added to the hydrogen bromide-water mixture, which has the progressive effect of firstly reducing the hydrogen bromide fraction in the azeotropic composition, and finally breaking the azeotrope completely, which happens when the amount of sulfuric relative to the sum of hydrogen bromide and water is about 55% by weight.

Another important aspect of the present invention is that the optimum operating point for any embodiment may be the presence of a hydrogen bromide at near-azeotropic composition relative to hydrogen bromide and water in the liquid portion at the outlet of the reaction section. The reason for this is twofold: on the one hand, if hydrogen bromide is present at concentrations above the azeotropic composition in the reaction mixture effluent, then excessive hydrogen bromide may also be contained in the gas portion of the reactor mixture effluent, and potentially it may not only compromise the operation of the subsequent gas scrubber column being described further below, but can also result in insufficient hydrogen bromide leftover in the liquid portion of the reaction mixture effluent, in which case there will be insufficient hydrogen bromide conversion to bromine in the treatment of step d), such as in electrolysis (or other hydrogen bromide conversion method). On the other hand, if hydrogen bromide is present at concentrations below the azeotropic composition in the reactor mixture effluent, then this means that there is excessive water present, which means additional energy to be spent for evaporating this water in the subsequent hydrogen bromide recovery and sulfuric acid purification steps. Furthermore, this may also result in a sub-azeotropic hydrogen bromide solution into the treatment of step d), such as electrolysis, which is inefficient. The optimum point can be thus targeted by controlling the amount of additional water into the gas scrubber as described further below.

As set out above, according to the present invention in step a) a gas is used, which contains at least one sulfur containing compound as main component or at least as impurity, in order to desulfurize the gas. Therefore, it is preferred to mix in step a) a gas, which contains a sulfur containing compound, with the bromine, water and, optionally and preferred also hydrogen bromide, wherein the gas, which contains at least one sulfur containing compound, is selected from the group consisting of biogases, natural gases, flue gases, combustion gases from sulfur compounds, tail gases and arbitrary combinations of two or more of the aforementioned gases. The concentration of the sulfur containing compound in the gas may be between 10 ppm to 99% by weight and more preferably 1 to 40% by weight, based on the total weight of the gas. It is further preferred in this embodiment that the gas, which contains the sulfur containing compound, contains less than 500 ppm by volume, more preferably less than 200 ppm by volume, even more preferably less than 100 ppm by volume and most preferably none of unsaturated compounds. This avoids an unnecessary consumption of bromine for side-reactions in the reaction of step b).

Concerning the reaction conditions of step b), i.e. concerning the reaction temperature and the reaction pressure, the present invention is not particularly restricted. Good results are in particular obtained, when the reaction in step b) is conducted at a temperature of at least 55°C and preferably at a temperature of 60 to 200°C.

Good results are also in particular obtained, when the reaction in step b) is conducted at a pressure of at least 5 barg and preferably at a pressure of 6 to 15 barg.

No catalyst is required for the reaction.

The reaction mixture effluent generated during the reaction of step b) of the process in accordance with the present invention may be in very rare cases, depending on the composition of the starting stream and depending on the reaction conditions, a single-phase liquid, in particular if a tremendously high pressure is applied in step b).

However, in the far most cases the reaction mixture effluent generated during the reaction of step b) will be a gas-/liquid two-phase mixture. In this case, it is suggested in accordance with a further development of the idea of the present invention to separate, as first sub-step of step c), the gas-/liquid two-phase mixture into a gas phase and into a liquid phase, such allowing in an easy manner to separate as gas phase a certain amount of hydrogen bromide from the sulfuric acid generated in the reaction of step b), along with any non-reactive gases which may be present in the reactor feed mixture. Good results are in particular obtained, when the gas-liquid mixture of the reaction mixture effluent is fed in step c) into a vessel and is allowed to phase separate therein so as to separate the reaction mixture effluent into a gaseous portion of the reaction mixture effluent and into a liquid portion of the reaction mixture effluent. Alternatively, the phase separation may be effected by subjecting the gas-liquid mixture of the reaction mixture effluent to at least one separation step being selected from the group consisting of stripping steps, absorption steps, extraction steps and arbitrary combinations of two or more of the aforementioned separation steps, so as to separate the reaction mixture effluent into a gaseous portion of the reaction mixture effluent and into a liquid portion of the reaction mixture effluent. Preferably, the aforementioned separation is performed under the temperature and pressure of the reaction mixture effluent as it leaves the reactor, i.e. without active cooling, active heating, active pressurizing or active depressurizing between the reaction and the separation.

Preferably, a portion of the liquid portion of the reaction mixture effluent is recycled into the reactor. This is in particular preferred if at least one sulfur containing compound contained in the gas is hydrogen sulfide. The hydrogen sulfide conversion reaction takes place in the liquid phase and the reaction is irreversible and mass transfer limited. It is therefore advantageous to supply the reaction mixture with a means of liquid recirculation, which helps to ensure that the hydrogen sulfide and the bromine preferably remains in the liquid phase. This also minimizes the amount of non-reacted bromine. If at least one sulfur containing compound is elemental sulfur, the reaction mixture effluent shall be filtered for the unreacted sulfur which shall be recycled into the reactor.

In a further development of the idea of the present invention, an oxidation of a part of S-containing compounds could be stopped at the elemental sulfur and do not proceed up to the sulfuric acid. Such a misfunctioning could be caused by different process upsets or occurred during the startup or shutdown of the operations (different transitory phases). In this case the reaction mixture effluent will also contain some elemental sulfur. The impurities of the elemental sulfur can be removed from the effluent by filtration, decantation or any other known in the prior art techniques and recycled back to the reactor.

In a further development of the idea of the present invention, it is suggested that the liquid portion of the reaction mixture effluent comprises at least 20% by weight and preferably about 50% by weight of hydrogen bromide relative to the water content of the liquid portion of the reaction mixture effluent. Again, in the rare case that the reaction mixture effluent generated in step b) is a single-phase liquid, the liquid portion of the reaction mixture effluent corresponds to the total reaction mixture effluent. However, if the reaction mixture effluent generated in step b) is a gas-liquid two-phase mixture, the liquid portion of the reaction mixture effluent corresponds to the liquid phase obtained after the aforementioned separation step. It is particularly preferred that the liquid portion of the reaction mixture effluent comprises the hydrogen bromide and water in concentrations, which are close to or at the hydrogen bromide-water azeotrope. For a binary mixture of water and hydrogen bromide at standard temperature and pressure, the azeotropic composition contains about 47% by weight of hydrogen bromide and about 53% by weight of water. However, in case of the liquid portion of the reaction mixture effluent, and the existing pressure conditions at reactor outlet conditions, the precise contents of water and hydrogen bromide of the azeotropic composition also depends on the concentration of the sulfuric acid. The formation of such a hydrogen bromide-water azeotrope in the liquid portion of the reaction mixture effluent is particularly advantageous, which is among others due to the fact that an over-azeotropic composition could cause too much hydrogen bromide to be dragged by the gas exiting the gas-liquid reaction mixture effluent during the aforementioned separation into the gaseous portion of the reaction mixture effluent and into a liquid portion of the reaction mixture effluent. Moreover, a sub-azeotropic composition means in the best case scenario that there is too much water being circulated in the process, which needs to be removed by evaporation decreasing the efficiency of the process, and means in the worst case scenario that, if no sulfuric acid is added to the liquid portion of the reaction mixture effluent, in the preferred subsequent distillation step set out further below, the composition of the overhead stream would depend on whether the hydrogen bromide-water azeotrope is broken inside the distillation column or not. If the hydrogen bromide-water azeotrope will be broken in the distillation step, hydrogen bromide having a comparable low water content may be removed in the overhead composition. However, if the hydrogen bromide-water azeotrope will be not broken in the distillation step, then water will be contained in high amounts in the overhead composition. On the other hand, assuming that the downstream unit for performing the treatment of step d), such as an electrolysis unit, can take up to 60% hydrogen bromide aqueous solution on a mass basis, the target concentration in the liquid phase at the reactor outlet may be adjusted accordingly, but the same overall principles as laid out above are still valid. The same principle applies whenever the azeotropic hydrogen bromide composition relative to water is altered as a result of the operating pressure in the reactor.

Apart from the aforementioned content of the hydrogen bromide, it is preferred that the liquid portion of the reaction mixture effluent comprises at least 0.1% by weight of sulfuric acid, 20 to 70% by weight of water and at most 2% by weight of bromine, based on the total weight of the liquid portion of the reaction mixture effluent. More preferably, the liquid portion of the reaction mixture effluent comprises 0.3 to 15% by weight of sulfuric acid, 25 to 65% by weight of water and at most 0.5% by weight of bromine, based on the total weight of the liquid portion of the reaction mixture effluent.

The gaseous portion of the reaction mixture effluent preferably comprises up to 50% by weight of hydrogen bromide based on the total weight of the gaseous portion of the reaction mixture effluent.

The liquid portion of the reaction mixture effluent, i.e. in the rare case that the reaction mixture effluent is a single-phase liquid composition the reaction mixture effluent and in the usual case that the reaction mixture effluent is a gas-/liquid two-phase composition the liquid portion of the reaction mixture effluent after having been separated from the gaseous portion of the reaction mixture effluent, is preferably separated by further separation steps into one or more further hydrogen bromide enriched compositions and into one or more sulfuric acid enriched compositions. For this purpose, it is preferred that step c) comprises, in addition to the aforementioned preferred gas-liquid separation step, at least one distillation step, preferably at least two distillation steps and more preferably three distillation steps.

Before being sent to the first distillation step, it is preferred that the pressure of the reaction mixture effluent or of the liquid portion of the reaction mixture effluent, respectively, is reduced, for instance by sending it through a throttling control valve.

In case that the reaction mixture effluent is a single-phase liquid composition, either the reaction mixture effluent or a mixture of the reaction mixture effluent and a sulfuric acid enriched composition obtained in step c) is subjected as feed to a first distillation step. As set out in further detail below, if the treatment of step d), such as thermal oxidation or electrolysis, is performed with a gaseous hydrogen bromide enriched composition, it is preferred that a mixture of the reaction mixture effluent and a sulfuric acid enriched composition obtained in step c) is subjected as feed to a first distillation step. This allows to increase the sulfuric acid concentration in the mixture of the reaction mixture effluent and the sulfuric acid enriched composition so that in this mixture the hydrogen bromide-water azeotrope is broken, or at least sufficiently modified so that sufficient hydrogen bromide is ultimately available to undergo the treatment is step d), such as electrolysis, and therefore be regenerated into the required amount of bromine at reactor inlet conditions. As set out above, thereby during the distillation step a gaseous hydrogen bromide composition having a comparable low water content may be separated as overhead composition from the liquid bottom composition comprising sulfuric acid and water. This is advantageous, because the treatment of step d), such as thermal oxidation and electrolysis, with a gaseous hydrogen bromide rich composition does not tolerate much of water and thereby the overhead composition with the comparable low water content must be merely dried or partially condensed so as to reduce the water content in the gaseous hydrogen bromide rich composition to an amount being acceptable for the treatment of step d). However, if the treatment, such as electrolysis, of step d) is performed with a liquid (i.e. aqueous) hydrogen bromide composition, the reaction mixture effluent may be used without admixture with a sulfuric acid enriched composition obtained in step c), because a higher water content in the overhead composition as a result of having not broken the hydrogen bromide-water azeotrope during the distillation is not harmful for the electrolysis. However, also in this case it is possible to mix the reaction mixture effluent and a sulfuric acid enriched composition obtained in step c), before using the mixture as feed to the first distillation step. This can be done, for example, to provide a liquid hydrogen bromide solution above azeotropic composition to the electrolysis cell.

In the aforementioned embodiment, the distillation step may be also a settling of the reaction mixture effluent or of the mixture of the reaction mixture effluent and a sulfuric acid enriched composition obtained in step c) in a vessel in order to separate the reaction mixture effluent or the mixture of the reaction mixture effluent and a sulfuric acid enriched composition obtained in step c) into a hydrogen bromide enriched gaseous composition and into a sulfuric acid enriched liquid composition. The settling in the vessel is considered as a distillation step with one theoretical stage.

In case that the reaction mixture effluent is a two-phase gas-/liquid composition, first the two-phase gas-/liquid composition is separated, as further set out above, into a gaseous portion of the reaction mixture effluent and into a liquid portion of the reaction mixture effluent for instance by feeding the reaction mixture effluent into a vessel and allowing it to phase separate therein or by subjecting it to at least one separation step being selected from the group consisting of stripping steps, absorption steps, extraction steps and arbitrary combinations of two or more of the aforementioned separation steps. Afterwards, the liquid portion of the reaction mixture effluent or a mixture of the liquid portion of the reaction mixture effluent and a sulfuric acid enriched composition obtained in step c) is subjected as feed to a first distillation step. As set out above, a mixing of the liquid portion of the reaction mixture effluent and a sulfuric acid enriched composition obtained in step c) before subjecting the mixture to the first distillation step is most preferred, when the treatment in step d) is performed with a gaseous hydrogen bromide enriched composition, whereas it is possible to use such a mixture, but also appropriate to use only the liquid portion of the reaction mixture effluent in case that the treatment in step d) is performed with a liquid (i.e. aqueous) hydrogen bromide enriched composition. Also in this embodiment, the distillation step may be also a settling of the reaction mixture effluent or of the mixture of the reaction mixture effluent and the sulfuric acid enriched composition obtained in step c) in a vessel.

The present invention is not particularly limited concerning the nature of the treatment performed in step d) as long as it is suitable to be convert at a portion of the hydrogen bromide contained in the hydrogen bromide enriched composition to bromine. Good results are in particular obtained, when the treatment of step d) is a hydrogen bromide electrolysis producing hydrogen and bromine or a thermal oxidation of hydrogen bromide to bromine and water.

A hydrogen bromide electrolysis is preferred as treatment step d), in particular when in step a) a significant amount of the gas stream containing at least one sulfur containing compound, such as natural gas from a natural gas field, is subjected to the process or when in step a) a gas being rich in the at least one sulfur containing compound, such as a gas containing more than 1% by weight of at least one sulfur containing compound, is subjected to the process. The pure hydrogen being produced in the electrolysis together with the hydrogen bromide may improve the profitability of the process.

A thermal oxidation is preferred as treatment step d), in particular when in step a) a limited amount of the gas stream containing at least one sulfur containing compound, such as biogas, is subjected to the process or when in step a) a gas containing only a low amount of the at least one sulfur containing compound, such as a gas containing 5,000 ppm or less of at least one sulfur containing compound, is subjected to the process. A thermal oxidation is the preferred option in these cases due to significantly lower capital expenditures and operational expenditures of a thermal oxidation in comparison to a hydrogen bromide electrolysis.

Both, a hydrogen bromide electrolysis or a thermal oxidation may be performed in the same plant, in which the process steps a), b), c), e) and f) are performed or off-site, i.e. in another plant, before the bromine produced thereby is led back into the plant, in which the process steps a), b), c), e) and f) are performed. Often, the produced hydrogen bromide enriched composition will be transported to external facilities for bromine recovery.

Alternatively, the treatment of the hydrogen bromide enriched composition in step d) may be performed via another off-site conversion step converting at least a portion of the hydrogen bromide contained in the hydrogen bromide enriched composition to bromine. An example of such another treatment is the recovery of bromine from a hydrogen bromide-containing solution with a substitution with chlorine. This type of treatment may be used, for example, for a mobile unit in order to provide some temporary interventions or may be used for the field with depleting production.

If in step d) a thermal oxidation is performed, it is preferred that in the thermal oxidation step at least a portion of the gaseous hydrogen bromide-rich, water depleted composition is mixed with oxygen or an oxygen containing gas, such as air, before the so obtained mixture is reacted or "burnt", respectively at a temperature of at least 700°C to bromine and water according to 4 HBr + O₂ → 2 Br₂ + 2 H₂O. This reaction is exothermic and accomplished with a conversion level of 50 to 95%. The reaction mixture obtained during the thermal oxidation mainly comprises bromine and water, but in addition non-reacted hydrogen bromide, nitrogen, a small amount of excess-oxygen or excess-air, respectively, and carbon dioxide from oxidation of traces of hydrocarbons contained in the reaction mixture. The hot effluent stream may be used, before at least a portion thereof is recycled to step a) of the process, for preheating any process stream, such as the feed stream into the first distillation step, and/or for the generation of steam. Alternatively or in addition thereto, the effluent stream of the thermal oxidation may be subjected to a scrubber step with water so as to remove depleted air thereof by quenching and washing with water, before at least a portion of the resulting hot aqueous effluent is optionally used to preheat a process stream and/or to generate steam and then recycled to step a) of the process. Still alternatively, the hot effluent stream exiting the thermal oxidizer may be recycled directly to step a) of the process.

In most of the aforementioned embodiments, in which a mixture of the reaction mixture effluent (in case of the reaction mixture effluent being a single-phase liquid composition) or of the liquid portion of the reaction mixture effluent (in case of the reaction mixture effluent being a two-phase gas-/liquid composition) and of a sulfuric acid enriched composition obtained in step c) is subjected as feed to a first distillation step, it is preferred on account of the aforementioned reasons that the feed contains so much sulfuric acid that the hydrogen bromide-water azeotrope is broken during the distillation, or at least that the azeotropic composition is altered so that sufficient hydrogen bromide will still be available for the treatment of step d), as mentioned above. Again, this allows to efficiently separate hydrogen bromide in the gas phase from water in the liquid phase so that in the distillation an overhead composition with a comparable low water concentration of for instance less than 30% by weight is obtained, which may be then further reduced by drying the overhead composition. The precise amount of sulfuric acid being necessary for breaking the hydrogen bromide-water azeotrope depends on the concentration of the sulfuric acid, but at a sulfuric acid concentration of at least 53% by weight relative to the water concentration, the hydrogen bromide-water azeotrope is reliably broken. Therefore, it is particularly preferred that the feed in these embodiments comprises at least 53% by weight of sulfuric acid relative to the water content. For instance, the feed comprises at least 40% by weight, more preferably at least 45% by weight and even more preferably at least 48% by weight of sulfuric acid as well as less than 38% by weight, more preferably at least 30% by weight and even more preferably at least 25% by weight of water based on the total weight of the feed. Good results are for instance obtained, when the feed comprises 50 to 70% by weight of sulfuric acid, based on the total composition of the feed.

The feed is separated in the first distillation step into an overhead composition of a gaseous hydrogen bromide enriched composition and into a bottom composition of a liquid sulfuric acid enriched composition containing more than 30% by weight of sulfuric acid and preferably less than 1,000 ppm of hydrogen bromide, more preferably less than 100 ppm of hydrogen bromide and most preferably less than 5 ppm of hydrogen bromide. Preferably, the hydrogen bromide enriched composition obtained in the first distillation step contains at most 1,000 ppm, more preferably at most 100 ppm, still more preferably at most 10 ppm and most preferably at most 1 ppm of sulfuric acid, 5 to 60% by weight of water and 40 to 95% by weight of hydrogen bromide based on the total weight of the hydrogen bromide enriched composition. On the other hand, the sulfuric acid enriched composition obtained in the first distillation step preferably contains more than 50% by weight of sulfuric acid and less than 50% by weight of water based on the total weight of the sulfuric acid enriched composition. More preferably, the sulfuric acid enriched composition obtained in the first distillation step contains 60 to 95% and even more preferably 70 to 80% of sulfuric acid and 5 to 40% and even more preferably 20 to 30% of water based on the total weight of the sulfuric acid enriched composition.

In a further development of the idea of the present invention, it is suggested that the hydrogen bromide enriched composition generated in the first distillation step as overhead composition is used for the treatment of step d). As set out above, if the treatment of step d) is an electrolysis, the electrolysis may be performed with a gaseous hydrogen bromide rich composition or with a liquid (i.e. aqueous) hydrogen bromide rich composition. However, if the treatment of step d) is a thermal oxidation, the thermal oxidation is preferably performed with a gaseous hydrogen bromide rich composition. In case of performing an electrolysis in step d), preferably the hydrogen bromide enriched composition generated in the first distillation step as overhead composition contains at most 1,000 ppm, preferably at most 100 ppm, still more preferably at most 10 ppm and most preferably at most 1 ppm of sulfuric acid, so as to protect the electrolysis cell and in particular the membrane against deterioration. However, in the case of performing a thermal oxidation in step d), such a low sulfuric acid content in the hydrogen bromide enriched composition generated in the first distillation step as overhead composition is possible, but not preferred.

In case of conducting the treatment and preferably the electrolysis of step d) with a liquid hydrogen bromide rich composition, it is preferred the hydrogen bromide enriched composition generated in the first distillation step as overhead composition is condensed in a condenser and that all or a portion thereof is fed into the electrolysis cell for performing the electrolysis. In this case the liquid hydrogen bromide enriched composition being fed into the treatment unit or electrolysis cell, respectively, has the same composition as the hydrogen bromide enriched composition generated in the first distillation step as overhead composition, i.e. it preferably contains at most 1,000 ppm of sulfuric acid, more preferably at most 100 ppm, still more preferably at most 10 ppm and most preferably at most 1 ppm of sulfuric acid, 5 to 60% by weight of water and 40 to 95% by weight of hydrogen bromide based on the total weight of the condensed hydrogen bromide enriched composition. In this embodiment it is preferred that only a portion of the condensed hydrogen bromide enriched composition is fed into the treatment unit or electrolysis cell, respectively, whereas the rest thereof bypasses the treatment unit or electrolysis cell, respectively and is recycled into the starting stream, i.e. is not sent into the treatment unit or electrolysis cell, respectively, but directly or indirectly by mixing it with other process streams into step a). Thereby, the supply of external hydrogen bromide to the starting stream in step a) is not required, thus further decreasing the total costs of the process and effecting a particular efficient utilization of the hydrogen bromide formed in the reaction of step b). A further advantage of using hydrogen bromide being not subjected to the electrolysis in step d), i.e. by letting bypass a portion of the hydrogen bromide being formed in the reaction of step b) the treatment of step d), in the starting stream is that only a part of the hydrogen bromide being obtained in step b) needs to be sent to electrolysis of step d) for the production of bromine and that for the case that the treatment of step d) is an aqueous hydrogen bromide electrolysis an addition of more water to the electrolysis of step d) is avoided, which both leads to significant energy savings of the process.

In accordance with a particular preferred embodiment of the present invention, the treatment of step d), i.e. the thermal oxidation or electrolysis, is not performed with a liquid hydrogen bromide rich composition, but with a gaseous hydrogen bromide rich composition. A particular advantage of performing the electrolysis of step d) with a gaseous hydrogen bromide rich composition is that - in comparison to performing the electrolysis of step d) with a liquid hydrogen bromide rich composition - the operational energy demand in the electrolysis cell is reduced by 10 to 15%. In this embodiment of conducting the treatment of step d) with a gaseous hydrogen bromide rich composition, it is preferred that at least a portion of the hydrogen bromide enriched composition obtained in the first distillation step as overhead composition is subjected to a water removal step so as to separate the hydrogen bromide enriched composition into a water enriched composition and into a gaseous hydrogen bromide-rich, water depleted composition comprising 90 to 99% by weight of hydrogen bromide and less than 10% by weight, preferably less than 5% by weight, more preferably less than 2% by weight and most preferably less than 1% by weight of water. At least a portion of the gaseous hydrogen bromide-rich, water depleted composition is subjected to the treatment of step d), i.e. either to the thermal oxidation or the electrolysis. In case that the treatment in step d) is a hydrogen bromide electrolysis, the gaseous hydrogen bromide-rich, water depleted composition preferably contains due to the aforementioned reasons at most 1,000 ppm, preferably at most 100 ppm, more preferably at most 10 ppm and most preferably at most 1 ppm of sulfuric acid. The water removal step may be performed by distillation, pervaporation or partial condensation. In the latter alternative, gaseous hydrogen bromide enriched composition obtained in the first distillation step as overhead composition may be cooled and partially condensed and then separated into the liquid water enriched composition and into the gaseous hydrogen bromide-rich, water depleted composition. While the gaseous portion of hydrogen bromide enriched composition is fed into the treatment unit of step d), i.e. thermal oxidation unit or electrolysis cell, in order to conduct the treatment of step d), the liquid portion of hydrogen bromide enriched composition is preferably allowed to bypass the treatment of step d) and is recycled into the starting stream, i.e. is not sent into the thermal oxidation unit or electrolysis cell, but directly or indirectly by mixing it with other process streams into step a).

Consequently, the present invention comprises the following two particular preferred embodiments. In the first of these two particular preferred embodiments, at least a portion of the hydrogen bromide enriched composition obtained in the first distillation step as overhead composition is subjected to a water removal step so as to separate the hydrogen bromide enriched composition into a water enriched composition and into a gaseous hydrogen bromide-rich, water depleted composition comprising 90 to 99% by weight of hydrogen bromide and less than 10% by weight and preferably less than 1% by weight of water, wherein at least a portion of the gaseous hydrogen bromide-rich, water depleted composition is subjected in step d) to a hydrogen bromide electrolysis.

In the second of these two particular preferred embodiments, at least a portion of the hydrogen bromide enriched composition obtained in the first distillation step as overhead composition is subjected to a water removal step so as to separate the hydrogen bromide enriched composition into a water enriched composition and into a gaseous hydrogen bromide-rich, water depleted composition comprising 90 to 99% by weight of hydrogen bromide and less than 10% by weight and preferably less than 1% by weight of water, wherein at least a portion of the gaseous hydrogen bromide-rich, water depleted composition is subjected in step d) to a hydrogen bromide electrolysis or to a thermal oxidation. Preferably, in the thermal oxidation at least a portion of the gaseous hydrogen bromide-rich, water depleted composition is mixed with oxygen or an oxygen containing gas, such as air, before the so obtained mixture is reacted at a temperature of at least 700°C to bromine and water.

Any of the thermal oxidation or of the hydrogen bromide electrolysis described above, may be performed in an off-site unit. In this case, at least a portion of the hydrogen bromide enriched composition obtained in the first distillation step is led to an off-site unit comprising a thermal oxidation unit or an electrolysis cell for a hydrogen bromide electrolysis, in which at least a portion of the hydrogen bromide enriched composition is converted to a bromine containing composition by converting at least a portion of the hydrogen bromide into bromine, before at least a portion of the produced bromine containing composition is recycled in step e) to step a). Alternatively, in step d) bromine is recovered in an off-site unit from a hydrogen bromide-containing solution with a substitution with chlorine.

In accordance with a further particular preferred embodiment of the present invention, the sulfuric acid enriched composition obtained as bottom composition of the first distillation step is further purified in one, two or more separation steps and in particular in one, two or more distillation steps so as to separate the sulfuric acid enriched composition obtained as bottom composition of the first distillation step into at least one essentially pure water composition and into at least one concentrated sulfuric acid composition. Good results are in particular obtained, when the sulfuric acid enriched composition obtained as bottom composition of the first distillation step is further purified in one or two further distillation steps, wherein the at least one essentially pure water composition is obtained as overhead composition of the first further distillation step (which is the second distillation step, seen in total), if only one further distillation step is performed, and as overhead composition of the second further step (which is the third distillation step, seen in total), if two further distillation steps are performed. The essentially pure water preferably contains at least 99.0% by weight, more preferably at least 99.5% by weight and even more preferably at least 99.9% by weight of water and preferably less than 10 ppm, more preferably less than 5 ppm and most preferably less than 1 ppm of bromine species, i.e. of hydrogen bromine, bromine and the like. In order to obtain such a pure water, it is preferred that the feed to the first further (i.e. second) distillation step, if only one further distillation step is performed, or to the second further (i.e. third) distillation step, if two further distillation steps are performed, contains at most 1,000 ppm, more preferably at most 100 ppm and most preferably at most 5 ppm of hydrogen bromide. The aforementioned embodiments are particularly preferred, because they reliably and efficiently allow to avoid water accumulation in the continuous process due to the possibility of removing pure and in particular hydrogen bromide-free water from the process as purge. More specifically, it is particular advantageous to control during the process the amount of water in the process and to minimize it. In order to control the water amount in the system, preferably a water purge is conducted. This is particularly advantageous in the case of performing in step d) a thermal oxidization, because therein water is co-produced with bromine. Without removal from the process, the so co-produced water would remain in the system leading to an accumulation of water. Nevertheless, the water control may be also relevant for other cases in view of operational flexibility. Due to environmental restrictions, bromine containing water cannot be purged into the environment, but needs to be purified in an additional water treatment facility in order to recover the remaining bromine species. The latter will result in a significant additional amount of energy and extra costs of the process. Consequently, it is preferred to separate the sulfuric acid enriched composition obtained as bottom composition of the first distillation step into at least one concentrated sulfuric acid composition and into at least one essentially pure water composition, thereby allowing to purge at least one essentially pure and thus essentially bromine species free water composition from the plant without no further purification thereof being required.

Thus, as set out above, in order to further purify and concentrate the sulfuric acid enriched composition obtained as bottom composition of the first distillation step, it is suggested in a further preferred embodiment to subject it to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition. It is further preferred that at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition. The overhead composition obtained in the third distillation step preferably contains at least 99.0% by weight, more preferably at least 99.5% by weight and even more preferably at least 99.9% by weight of water and less than 10 ppm, preferably less than 5 ppm and more preferably less than 1 ppm of bromine species, i.e. of hydrogen bromine, bromine and the like. This pure water may be purged without any further required purification step, thus reliably and efficiently allowing to avoid water accumulation in the continuous process.

As set out further above, it is preferred particularly in case of performing the treatment in step d) by a thermal oxidation or a hydrogen bromide electrolysis with a gaseous hydrogen bromide enriched composition that the sulfuric acid and water concentrations in the feed to the first distillation column is adjusted so that the hydrogen bromide-water azeotrope is broken during the distillation. Thereby, it is allowed to efficiently separate hydrogen bromide in the gas phase from water. In order to adjust the sulfuric acid and water concentrations in the feed to the first distillation column appropriately, it is suggested in a further development of the idea of the present invention that a portion of the bottom composition obtained in the second distillation step and/or a portion of the bottom composition obtained in the third distillation step is recycled to and mixed as sulfuric acid enriched composition with the reaction mixture effluent (in case that the reaction mixture effluent is a single-phase liquid composition) or with the liquid portion of the reaction mixture effluent (in case that the reaction mixture effluent is a gas-/liquid two-phase composition) so as to obtain a mixture containing at least 35% by weight and preferably 50 to 70% by weight of sulfuric acid based on the total wight of the mixture and subjected the mixture as feed to the first distillation step, before the so obtained mixture is subjected as feed to the first distillation step.

In accordance with a further preferred embodiment of the present invention, the gaseous portion of the reaction mixture effluent or a mixture of the gaseous portion of the reaction mixture effluent and the overhead composition of the second distillation step is subjected to a scrubbing step with water so as to obtain a gaseous composition containing less than 10 ppm of sum of bromine and hydrogen bromide and an aqueous composition containing 5 to 40% by weight of hydrogen bromide, wherein the aqueous composition is recycled to step a). Thereby, it is achieved that unreacted bromine, which may be contained in the gaseous portion of the reaction mixture effluent and which is subjected to the scrubbing step, is returned to the reactor, which allows to more efficiently utilize the bromine. The aqueous composition may be recycled directly or indirectly by mixing it with other process stream(s) to step a). At least a portion of the water being necessary for the scrubbing step may be a portion or all of the overhead composition obtained in the third distillation step. For instance, a portion of the overhead composition obtained in the third distillation step may be purged, whereas the other portion may be used in the scrubbing step. The remainder of required water for the scrubbing step may be fresh water.

Alternatively, even if less preferred, the gaseous portion of the reaction mixture effluent or a mixture of the gaseous portion of the reaction mixture effluent and the overhead composition of the second distillation step may be directly recycled to step a), i.e. without being subjected to a scrubbing step. In this embodiment, a portion of the overhead composition obtained in the third distillation step may be also directly recycled to step a).

In accordance with a particular preferred embodiment of the present invention, in step d) an electrolysis and/or a thermal oxidation is performed with a gaseous hydrogen bromide rich composition and step c) comprises the following steps:
i) feeding the reaction mixture effluent in step c) into a vessel and allowing it to phase separate therein so as to separate the reaction mixture effluent into a gaseous portion of the reaction mixture effluent and into a liquid portion of the reaction mixture effluent,
ii) subjecting a mixture of the liquid portion of the reaction mixture effluent and a sulfuric acid enriched composition obtained in step c) as feed to a first distillation step so as to separate the feed into an overhead composition of a hydrogen bromide enriched composition containing at most 1,000 ppm of sulfuric acid and into a bottom composition of a sulfuric acid enriched composition containing more than 30% by weight of sulfuric acid and less than 1,000 ppm of hydrogen bromide, wherein the feed preferably contains at least 53% by weight relative of sulfuric acid relative to the water concentration,
iii) subjecting at least a portion of the hydrogen bromide enriched composition obtained in the first distillation step as overhead composition to a water removal step so as to separate the hydrogen bromide enriched composition into a water enriched composition and into a gaseous hydrogen bromide-rich, water depleted composition comprising 90 to 99% by weight of hydrogen bromide and less than 10% by weight and preferably less than 1% by weight of water, and subjecting at least a portion of the gaseous hydrogen bromide-rich, water depleted composition to the treatment in step d), which is preferably a thermal oxidation or a hydrogen bromide electrolysis,
iv) subjecting the sulfuric acid enriched composition obtained as bottom composition of the first distillation step to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein preferably at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition,
v) recycling and mixing a portion of the bottom composition obtained in the second distillation step and/or a portion of the bottom composition obtained in the third distillation step as sulfuric acid enriched composition with the liquid portion of the reaction mixture effluent so as to produce the mixture of the liquid portion of the reaction mixture effluent and a sulfuric acid enriched composition used in step ii),
vi) recycling at least a portion of the bromine containing composition obtained in the electrolysis to step a) and
vii) optionally, either recycling the gaseous portion of the reaction mixture effluent or a mixture of the gaseous portion of the reaction mixture effluent and the overhead composition of the second distillation step to step a) or subjecting the gaseous portion of the reaction mixture effluent or a mixture of the gaseous portion of the reaction mixture effluent and the overhead composition of the second distillation step to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a).

As alternative to the aforementioned step i), the separation may be achieved in step i) by subjecting the reaction mixture effluent to at least one separation step being selected from the group consisting of stripping steps, absorption steps, extraction steps and arbitrary combinations of two or more of the aforementioned separation steps.

Moreover, the aforementioned process may be modified by replacing the first distillation step ii) by a settling of the reaction mixture effluent or of the mixture of the reaction mixture effluent and a sulfuric acid enriched composition obtained in step c) in a vessel in order to separate the reaction mixture effluent or of the mixture of the reaction mixture effluent and a sulfuric acid enriched composition obtained in step c) into a hydrogen bromide enriched gaseous composition and into a sulfuric acid enriched composition. The settling in the vessel is considered as a distillation step with one theoretical stage.

In addition, it is preferred in the above-mentioned process that the overhead composition consisting mainly of water obtained in the third distillation is recycled to step a) or to the optional scrubber step.

In accordance with an alternative particular preferred embodiment of the present invention, in step d) an electrolysis is performed with a liquid hydrogen bromide rich composition and step c) comprises the comprises the following steps:
i) feeding the reaction mixture effluent in step c) into a vessel and allowing it to phase separate therein so as to separate the reaction mixture effluent into a gaseous portion of the reaction mixture effluent and into a liquid portion of the reaction mixture effluent,
ii) subjecting the liquid portion of the reaction mixture effluent or a mixture of the liquid portion of the reaction mixture effluent and a sulfuric acid enriched composition obtained in step c) as feed to a first distillation step so as to separate the feed into an overhead composition of a hydrogen bromide enriched composition containing at most 1,000 ppm of sulfuric acid and into a bottom composition of a sulfuric acid enriched composition containing more than 30% by weight of sulfuric acid and less than 1,000 ppm of hydrogen bromide,
iii) condensing at least a portion of the hydrogen bromide enriched composition obtained in the first distillation step as overhead composition and subjecting at least a portion of the condensed portion to the treatment in step d), which is preferably a hydrogen bromide electrolysis,
iv) subjecting the sulfuric acid enriched composition obtained as bottom composition of the first distillation step to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein preferably at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition,
v) optionally, recycling and mixing a portion of the bottom composition obtained in the second distillation step and/or a portion of the bottom composition obtained in the third distillation step as sulfuric acid enriched composition with the liquid portion of the reaction mixture effluent so as to produce the mixture of the liquid portion of the reaction mixture effluent and a sulfuric acid enriched composition used in step ii),
vi) recycling at least a portion of the bromine containing composition obtained in the electrolysis to step a),
vii) optionally, either recycling the gaseous portion of the reaction mixture effluent to step a) or subjecting the gaseous portion of the reaction mixture effluent to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a), and
viii) optionally, recycling a portion of the condensed portion of the hydrogen bromide enriched composition obtained in step iii), without subjecting it to the electrolysis in step d), to step a).

As alternative to the aforementioned step i), the separation may be achieved in step i) by subjecting the reaction mixture effluent to at least one separation step being selected from the group consisting of stripping steps, absorption steps, extraction steps and arbitrary combinations of two or more of the aforementioned separation steps.

Moreover, the aforementioned process may be modified by replacing the first distillation step ii) by a settling of the reaction mixture effluent or of the mixture of the reaction mixture effluent and a sulfuric acid enriched composition obtained in step c) in a vessel in order to separate the reaction mixture effluent or of the mixture of the reaction mixture effluent and a sulfuric acid enriched composition obtained in step c) into a hydrogen bromide enriched gaseous composition and into a sulfuric acid enriched composition. The settling in the vessel is considered as a distillation step with one theoretical stage.

In addition, it is preferred in the above-mentioned process that the overhead composition consisting mainly of water obtained in the third distillation is recycled to step a) or to the optional scrubber step.

In a further development of the idea of the present invention, it is suggested that the treatment is performed in step d) as hydrogen bromide electrolysis by using an electrolytic cell comprising an anode, a cathode and a membrane sandwiched between the anode and the cathode, wherein an electric field can be applied between the anode and the cathode. The hydrogen bromide enriched composition containing at most 1,000 ppm of sulfuric acid obtained in step c) is fed to the anode, optionally a second composition comprising hydrogen bromide and water is fed to the cathode, and the electrolytic cell is operated to produce hydrogen at the cathode, wherein the bromine containing composition is produced at the anode.

As set out in further detail below, the electrolysis is performed in step d) preferably by using an electrolytic cell comprising a membrane made of a fluoropolymer membrane having a glass transition temperature of at least 110°C.

Furthermore, it is preferred that the electrolysis is performed in step d) by operating the electrolysis cell at an operational temperature of at least 70°C, wherein the operational temperature is below the boiling point of the optional second composition fed to the cathode, and preferably at an operational temperature of 70°C to 122°C.

In addition, it is preferred that the electrolysis is performed in step d) by operating the electrolytic cell at an operational pressure, which increases from the anode to the cathode.

The anode and the cathode regularly comprise electroconductive material, especially metal, coated metal, carbon cloth, graphite felt, carbon fibre composite, carbon loaded polymer or graphite, and are preferably made of carbon fibre composite or coated metal. The membrane may be a sheet or layer which can be used in standard electrolysis cells preferably as a proton exchange membrane. Accordingly, preferably protons can migrate through such a membrane.

As set out above, the electrolysis may be performed with a gaseous hydrogen bromide enriched composition or with a liquid (i.e. aqueous) hydrogen bromide enriched composition. In an aqueous hydrogen bromide containing composition, the hydrogen bromide is dissolved in water, wherein the hydrogen bromide dissolved in water will regularly be dissociated in the water so that the composition will comprises ionic species, such as especially protons, hydronium ions and bromine cations. At the anode, to which the hydrogen bromide is fed, protons are generated during the electrolysis, which then migrate through the membrane to the cathode. According to the present invention, an aqueous hydrogen bromide enriched composition may also be fed to the cathode. This allows to operate the electrolytic cell at a lower operational voltage, which reduces the operational costs. Furthermore, this allows to operate the electrolytic cell at higher temperatures, which lowers the cooling and/or heating requirements of the electrolysis cell, which also reduces the operational costs. Additionally, this allows to operate the electrolytic cell at higher current densities, which reduces the capital expenditures of the electrolysis cell. Moreover, this may reduce the concentration gradient across the membrane and thus reduce or even mitigate undesirable transfer of hydrogen bromide and/or bromine and/or bromine cations from the anode to the cathode through the membrane. Additionally, the presence of hydrogen bromide on the cathode side may allow hydrogen bromide to cross through the membrane from the cathode to the anode side. This results in an increase of the efficiency of the system and allows avoiding any perturbation during electrolysis. Without wishing to be bound to theory, it is assumed that in this embodiment there is actually a hydrogen bromide crossing in reverse direction, i.e., from the cathode to anode. Such a hydrogen bromide crossing in reverse direction is considered to be one of the reasons why the efficiency of the electrolysis of this embodiment can be increased. It is preferred in this embodiment that the hydrogen bromide concentration of the composition fed to the cathode is at least 0.5 mol/kg, more preferably at least 1 mol/kg, still more preferably at least 2 mol/kg, even more preferably at least 3 mol/kg, further preferably at least 4 mol/kg, even further preferably at least 5 mol/kg and most preferably at least 6 mol/kg, with mol/kg referring to the mol of hydrogen bromide per kilogram of the respective composition.

Independently, from whether a hydrogen bromide composition is also led to the cathode of the electrolysis cell or not, it is preferred that the electrolytic cell is operated during the electrolysis of step d) at an operational voltage Uₒₚ between more than 0 mV to 1,900 mV and preferably between more than 0 mV to 1,700 mV. Operating the electrolytic cell at such an operational voltage improves the selectivity of the reaction towards hydrogen bromide electrolysis and thereby reduce the operational costs of the electrolysis.

In a further development of the idea of the present invention it is preferred that the electrolysis in step d) is performed by operating the electrolytic cell at an operational temperature of 70°C to 122°C. Operating the electrolytic cell at such an operational temperature can lower the cooling and/or heating requirements. Such higher temperatures increase the proton conductivity of a fluoropolymer-comprising membrane, which allows to operate the electrolysis cell at higher current densities and/or at lower voltages. Higher current densities help to keep the capital expenditures low. It is thus particularly preferred that the operational temperature is maintained at more than 70°C, more preferably at more than 90°C and most preferably at more than 100°C.

It is further preferred that the electrolytic cell is operated during the electrolysis in step d) at an operational pressure, which increases from the anode to the cathode. In other words, there is a pressure gradient which increases from the anode to the cathode, wherein the respective pressures at the anode and the cathode have the same reference point, i.e., are either both absolute pressures, or are both gauge pressures relative to the atmosphere surrounding the electrolytic cell. In such a case, the electrolysis regularly occurs in the gaseous phase, i.e. by feeding gaseous streams to the anode and the cathode. The pressure at the cathode is in such a case higher than the pressure at the anode, preferably higher by at least 0.01 MPa (i.e. the difference between the pressure at the cathode and the pressure at the anode is 0.01 or more MPa), more preferably higher by at least 0.02 MPa, still more preferably higher by at least 0.05 MPa and most preferably higher by at least 0.1 MPa. As an example, when the absolute pressure at the anode is 0.1 MPa, the absolute pressure at the cathode is 0.11 to 0.3 MPa, more preferably 0.12 to 0.25 MPa, still more preferably 0.15 to 0.2 MPa and most preferably 0.2 MPa. However, optional pressures at the cathode which are higher than the pressure at the anode by 1 MPa, by 2 MPa, by 3 MPa, by 4 MPa or even by 5 MPa are also contemplated. With such increasing pressures, or pressure gradients, reduced operational voltages of the electrolytic cell can be achieved, which can lead to reduced operational costs. Additionally, the pressure gradient may allow to obtain the hydrogen at the cathode side at a higher pressure so that no or less compression may be required subsequently for densifying the obtained hydrogen. Additionally, the operation at differential pressure improves the operational parameters.

According to a further preferred embodiment of the present invention, the membrane used for the electrolysis of step d) is a fluoropolymer membrane. Good results are in particular obtained, when the fluoropolymer membrane has a glass transition temperature of at least 110°C, preferably of at least 120°C and more preferably of at least 125°C. Preferably, the fluoropolymer membrane (in a dry state) consists of the fluoropolymer and more preferably consists of the fluoropolymer in a chemically stabilized form. As used herein, a fluoropolymer is a fluorocarbon-based polymer with multiple carbon-fluorine bonds. Such a fluoropolymer is regularly free of silicon atoms. Such a fluoropolymer may further be free of chlorine, bromine and/or iodine atoms. As used herein, the glass transition temperature of the fluoropolymer membrane is determined according to DIN EN ISO 11357-2:2020-08 (half-step-height method). Accordingly, as used herein, the glass transition temperature of the fluoropolymer membrane is determined by a differential scanning calorimetry (DSC) measurement, more specifically from a curve obtained by such a DSC measurement. The glass transition temperature of the fluoropolymer membrane is determined on a sample of the fluoropolymer membrane, more specifically on a sample of the fluoropolymer membrane in the fully hydrated state. According to the present invention, a fluoropolymer membrane in a fully hydrated state is a fluoropolymer membrane, which does not take up any further (deionized) water (deionized H₂O, as described in ASTM D5127-13(2018) standard) at a temperature of 80°C after 24 hours, which is hence a fully hydrated fluoropolymer membrane, or a fluoropolymer membrane saturated with water. Hence, the water uptake of the fluoropolymer membrane has reached its maximum. A fully hydrated fluoropolymer membrane is obtained by immersing the fluoropolymer membrane in deionized water which will result in a weight gain of the fluoropolymer membrane as measurable by a balance. When there is no weight gain over time anymore, the fluoropolymer membrane is in the fully hydrated state. A fluoropolymer membrane in the fully hydrated state is regularly obtained by immersing the fluoropolymer membrane in deionized water having a temperature of 80°C for a time period of 24 hours. As used herein, the glass transition temperature refers to the lowest glass transition temperature of the fluoropolymer. It is known that certain polymers or membranes made of polymers, respectively, e.g., Nafion^{®}-type membranes, may have several glass transition temperatures, in particular two glass transition temperatures. The first glass transition temperature is due to the mobility of the main chain in the polymer matrix, while the second glass transition temperature is due to side chain effects, especially effects associated with strong interactions of functional groups in such side chains like sulfonic acid groups. Once the first glass transition temperature has been reached, the membrane undergoes irreversible changes and can in particular not be used for an electrolysis process anymore. Accordingly, in the context of the present invention, if a material, especially a membrane or membrane sample, exhibits several glass transition temperatures, only the lowest glass transition temperature is relevant for the glass transition temperature definitions provided herein.

A fluoropolymer membrane having a glass transition temperature at least 110°C allows to carry out the electrolysis at higher temperatures and/or at higher pressures because of a more resilient fluoropolymer membrane. Without wishing to be bound to theory, it is assumed that the resilience to hydrogen bromide and, after electrolysis, of hydrogen and bromine at higher temperatures and also at higher pressures is imparted by the fluoropolymer membrane having a glass transition temperature of at least 110°C. Moreover, especially higher temperatures can decrease the resistance of the fluoropolymer membrane which can allow for higher proton conductivities. Higher proton conductivities can allow for higher current densities at lower operational voltages. Higher current densities helps to keep the capital expenditures low, while lower operational voltages lead to lower operational costs.

It is preferred that the fluoropolymer of the membrane comprises -(CF₂-CF₂)- repeat units. Such -(CF₂-CF₂)- repeat units increase the resilience of the fluoropolymer membrane. An increased resilience allows that the hydrogen bromide electrolysis may be performed at higher temperatures and at higher pressures, which allow the operation at higher current densities and/or at lower voltages, thereby making the electrolysis more economical. Moreover, it is preferred that the fluoropolymer of the membrane does not comprise structural entities of the formula -O-CF₂-CF(CF₃)-O-. Such structural entities are present in commercial membranes sold under the tradename Nafion^{®}, but may lead to less rigidity of the membrane, which is thus more prone to degradation at higher temperatures and higher pressures.

It is preferred that the fluoropolymer membrane, more specifically the fluoropolymer comprised by and preferably constituting the membrane, comprises -CFs chain ends. Such -CFs chain ends may increase the resilience of the fluoropolymer membrane. An increased resilience can allow for HBr electrolysis at higher temperatures and at higher pressures, with may allow operation at higher current densities and/or at lower voltages, thereby making the method according to the present invention more economical.

In accordance with a particular preferred embodiment of the present invention the fluoropolymer of the membrane is a sulfonated fluoropolymer. As used herein, sulfonated means that the fluoropolymer of the fluoropolymer membrane bears -SO₃H groups. Such -SO₃H groups increase the proton conductivity of the fluoropolymer membrane, which allows to operate the electrolysis at higher current densities and/or at lower voltages, thereby making the electrolysis more economical. It is particularly preferred that the sulfonated fluoropolymer comprises -O-(CF₂)ₙ-SO₃H groups, wherein n is an integer selected from 1, 2, 3, 4 and 5, preferably 2. Such -O-(CF₂)ₙ-SO₃H groups help to achieve an increased proton conductivity of the fluoropolymer membrane, while simultaneously increasing the resilience of the fluoropolymer membrane. An advantageous balance between these effects is in particular obtained, when n is selected from 1 to 5 and especially when n is 2. Without wishing to be bound to theory, it is assumed that the comparably short chain length of the -O-(CF₂)ₙ-SO₃H groups increases the glass transition temperature of the fluoropolymer membrane making it more resilient at higher temperatures. As such, the sulfonated fluoropolymer membrane is particularly advantageous from the viewpoint of hydrogen bromide electrolysis at higher temperatures and/or at higher pressures, and hence at higher current densities and/or at lower voltages. As such, the sulfonated fluoropolymer membrane makes the electrolysis particularly economical.

It is preferred that the sulfonated fluoropolymer membrane comprises a hydrolysed copolymer of F₂C=CF₂ and CF₂=CF-O-(CF₂)₂-SO₂F. Such a hydrolysed copolymer can lead to an increased proton conductivity and/or an increased resilience of the fluoropolymer membrane. As such, the sulfonated fluoropolymer membrane is particularly advantageous from the viewpoint of hydrogen bromide electrolysis at higher temperatures and/or at higher pressures, and hence at higher current densities and/or at lower voltages. As such, the sulfonated fluoropolymer membrane makes the electrolysis particularly economical.

It is further preferable that the fluoropolymer membrane has an acid capacity of at least 0.9 meq/g, more preferably between 0.95 and 1.5 meq/g and most preferably between 1.0 and 1.2 meq/g. As used herein, meq/g refers to milli-equivalent per gram, wherein the equivalent is mol -H (i.e., mol of H-acidic cites), preferably mol -SO₃H (i.e., mol of SO₃H-groups). The acid capacity represents the total of active sites or functional groups responsible for proton exchange of the fluoropolymer membrane. Such an acid capacity can increase the proton conductivity and can thereby lead to an increased hydrogen bromide conversion in the electrolysis. An increased hydrogen bromide conversion reduces the need for a separation and possible recirculation of unconverted hydrogen, which can help to maintain low capital expenditures.

It is further preferred that the fluoropolymer membrane (in dry state) has a thickness of 25 to 350 µm, more preferably of 40 to 150 µm, still more preferably of 45 to 130 µm and most preferably of 45 to 55 µm. Such a thickness achieves a good balance between sufficient resilience on the one hand and low capital expenditures on the other hand. At a lower thickness, there is a risk of undesired crossover of hydrogen/bromine through the fluoropolymer membrane and at a higher thickness, an undesirable decrease in proton conductivity may result.

In a further development of the idea of the present invention, it is proposed that the fluoropolymer membrane (in dry state) has a density of at least 1.70 g/cm³, more preferably of at least 1.80 g/cm³, still more preferably of 1.80 to 2.00 g/cm³ and most preferably of 1.90 to 1.95 g/cm³. The density of the fluoropolymer membrane may be determined on a sample thereof according to ASTM D792-20. It is further preferred that the fluoropolymer membrane (in dry state) has a tensile modulus of 100 to 500 MPa, more preferably of 150 to 400 MPa, still more preferably of 200 to 300 MPa and most preferably of 260 to 280 MPa. The tensile modulus of the fluoropolymer membrane may be determined on a sample thereof according to ASTM D638-14. Moreover, it is preferred that the fluoropolymer membrane (in dry state) has a tensile stress at break in machine direction (MD), according to ASTM D882-18, of 10 to 70 MPa, more preferably of 20 to 60 MPa, still more preferably of 30 to 50 MPa and most preferably of 35 to 45 MPa. Also, it is preferred that the fluoropolymer membrane (in dry state) has a tensile stress at break in cross direction (CD), according to ASTM D882-18, of 5 to 60 MPa, more preferably of 10 to 50 MPa, still more preferably of 20 to 40 MPa and most preferably of 25 to 35 MPa. In addition, it is preferred that the fluoropolymer membrane (in dry state) has an elongation at break in machine direction (MD), according to ASTM D882-18, of 100 to 200%, more preferably of 120 to 180%, still more preferably of 140 to 160% and most preferably of 145 to 155%. Likewise, it is preferred that the fluoropolymer membrane (in dry state) has an elongation at break in cross direction (CD), according to ASTM D882-18, of 100 to 350%, more preferably of 120 to 300%, still more preferably of 150 to 250% and most preferably of 190 to 210%. The aforementioned properties increase the resilience of the fluoropolymer membrane. An increased resilience allows that the hydrogen bromide electrolysis may be performed at higher temperatures and at higher pressures, which may allow operation at higher current densities and/or at lower voltages, thereby making the electrolysis of step d) more economical.

In accordance with a second aspect, the present invention relates to a plant for producing hydrogen comprising:
a) a reactor comprising one or more inlet lines and an outlet line for a reaction mixture effluent,
b) a vessel comprising an inlet line being connected with the outlet line for the reaction mixture effluent, wherein the vessel further comprises an outlet line for the gaseous portion of the reaction mixture effluent and an outlet line for the liquid portion of the reaction mixture effluent, wherein the outlet line for the gaseous portion of the reaction mixture effluent is directly or indirectly connected with an inlet line of the reactor,
c) a first distillation column comprising an inlet line being connected with the outlet line for the liquid portion of the reaction mixture effluent, wherein the first distillation column comprises an overhead outlet line for a gaseous hydrogen bromide enriched composition and a bottom outlet line for sulfuric acid enriched composition,
d₁) an electrolysis cell comprising an anode, a cathode and a membrane sandwiched between the anode and the cathode as well as an inlet line for a hydrogen bromide containing composition, an outlet line for hydrogen and an outlet line for a bromine containing composition, wherein the inlet line of the electrolysis cell is connected with the outlet line for the hydrogen bromide enriched composition of the first distillation column i) either directly or ii) via a condenser being arranged therebetween comprising an inlet line being connected with the overhead outlet line for the gaseous hydrogen bromide enriched composition of the first distillation column and comprising an outlet line being connected with the inlet line for a hydrogen bromide containing composition of the electrolysis cell or iii) via a vessel being arranged therebetween comprising an inlet line being connected with the overhead outlet line for the gaseous hydrogen bromide enriched composition of the first distillation column, comprising a liquid outlet line and comprising a gas outlet line, with the gas outlet line being connected with the inlet line of the electrolysis cell, and wherein the outlet line for the bromine containing composition of the electrolysis cell is directly or indirectly connected with an inlet line of the reactor, or
d₂) a thermal oxidizer or
d₃) an off-site conversion unit for converting at least a portion of the hydrogen bromide contained in the hydrogen bromide enriched composition to bromine,
e) a second distillation column comprising an inlet line being connected with the bottom outlet line for the sulfuric acid enriched composition of the first distillation column, wherein the second distillation column comprises an overhead outlet line for a hydrogen bromide enriched composition and a bottom outlet line for sulfuric acid enriched composition, and
f) optionally, a third distillation column comprising an inlet line being connected with the bottom outlet line for the sulfuric acid enriched composition of the second distillation column, wherein the third distillation column comprises an overhead outlet line for a water enriched composition and a bottom outlet line for sulfuric acid product composition.

The vessel b) may be also a stripping column, an absorption column, an extraction column or a distillation column.

In a further development of the idea of the present invention, it is suggested that the plant further comprises a recycle line, which leads from the bottom outlet line of the second distillation column and/or from the bottom outlet line of the third distillation column into the inlet of the first distillation column.

Furthermore, it is preferred that the plant further comprises a scrubber column, which comprises an inlet line being connected with the outlet line for the gaseous portion of the reaction mixture effluent of the vessel, wherein preferably the overhead outlet line of the second distillation column is connected with the outlet line for the gaseous portion of the reaction mixture effluent of the vessel, wherein the scrubber column further comprises an inlet line for water, an outlet line for a gaseous composition containing less than 10 ppm of sum of bromine and hydrogen bromide and an outlet line for an aqueous composition containing 5 to 40% by weight of hydrogen bromide. Preferably, the inlet line for water of the scrubber column is combined upstream of the scrubber column with a recycle line coming from the overhead outlet line of the third distillation column for water produced as overhead composition in the third distillation column.

Specific embodiments in accordance with the present invention are subsequently described with reference to the appended drawings and by examples.
- Fig. 1: is a schematic view of a plant for removing at least a sulfur containing compound from gas containing at least one sulfur containing compound using a gas phase electrolysis in accordance with one embodiment of the present invention.
- Fig. 2: is a schematic view of a plant for removing at least a sulfur containing compound from gas containing at least one sulfur containing compound using a gas phase electrolysis in accordance with another embodiment of the present invention.
- Fig. 3: is a schematic view of a plant for removing at least a sulfur containing compound from gas containing at least one sulfur containing compound using a liquid phase electrolysis in accordance with one embodiment of the present invention.
- Fig. 4: is a schematic view of a plant for producing hydrogen using a liquid phase electrolysis in accordance with another embodiment of the present invention.
- Fig. 5: is a schematic view of a plant for removing at least a sulfur containing compound from gas containing at least one sulfur containing compound using a liquid phase electrolysis in accordance with another embodiment of the present invention.
- Fig. 6: is a schematic view of a plant for removing at least a sulfur containing compound from gas containing at least one sulfur containing compound using a thermal oxidizer in accordance with another embodiment of the present invention.
- Fig. 7: is a schematic view of a plant for removing at least a sulfur containing compound from gas containing at least one sulfur containing compound using an external unit for recovering bromine thermal oxidizer in accordance with one embodiment of the present invention.

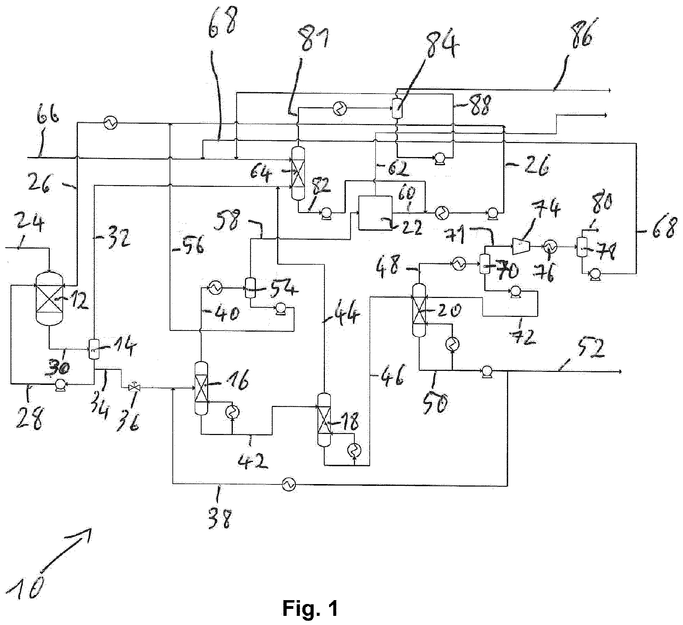

The plant 10 shown in figure 1 using a gas phase electrolysis as treatment of step d) comprises a reactor 12, a separation vessel 14, three distillation columns, namely a first distillation column 16, a second distillation column 18 and a third distillation column 20, and an electrolysis cell 22. The reactor 12 comprises an inlet line 24 for natural gas, an inlet being connected with a recycle line 26 for a bromine, hydrogen bromide and water containing composition, an inlet being connected with a recycle line 28 for liquid portion of the reaction mixture effluent and an outlet line 30 for reaction mixture effluent. The outlet line 30 for reaction mixture, from which the recycle line 28 splits off, leads into the vessel 14, which is further connected with an outlet line 32 for the gaseous portion of the reaction mixture effluent and with an outlet line 34 for the liquid portion of the reaction mixture effluent. The outlet line 34 for the liquid portion of the reaction mixture effluent leads through a throttle 36, then combines with a recycle line 38 for a sulfuric acid enriched composition and then leads to an inlet of the first distillation column 16. The first distillation column 16 comprises an overhead outlet line 40 and a bottom outlet line 42, which leads into an inlet of the second distillation column 18. Likewise, the second distillation column 18 comprises an overhead outlet line 44 and a bottom outlet line 46, which leads into an inlet of the third distillation column 20. Also, the third distillation column comprises an overhead outlet line 48 and a bottom outlet line 50, which splits into the recycle line 38 for a sulfuric acid enriched composition and into a sulfuric acid product outlet line 52.

The overhead outlet line 40 of the first distillation column 16 leads into a vessel 54, which is further connected with an outlet line 56 for liquid and an outlet line 58 for gas. The outlet line 58 for gas leads into the electrolysis cell 22, which further comprises an outlet line 60 for a bromine containing composition and an outlet line 62 for hydrogen. The plant 10 further comprises a scrubber column 64, which is connected with the outlet line 32 for the gaseous portion of the reaction mixture effluent, which is combined upstream of the scrubber column 64 with the overhead outlet line 44 of the second distillation column 18. The scrubber column 64 further comprises an inlet line 66 for water, which is combined upstream of the scrubber column 64 with a recycle line 68 for water produced as overhead composition in the third distillation column 20. More specifically, the overhead outlet line 48 of the third distillation column 20 leads into a vessel 70, from which a liquid recycle line 72 leads back into the third distillation column 20 and a gas line 71 leads into a compressor 74, from there to a heat exchanger 76 and from there to a further vessel 78. The vessel 78 is connected with a gas outlet line 80 and with the recycle line 68 for liquid water. The scrubber column 64 is further connected with an outlet line 81 for a gaseous composition containing less than 10 ppm of sum of bromine and hydrogen bromide and an outlet line 82 for an aqueous composition containing 5 to 40% by weight of hydrogen bromide. While the outlet line 81 leads to a vessel 84 comprising a gas outlet line 86 and a recycle line 88 leading into the water inlet line 66 of the scrubber column 64, the outlet line 82 of the scrubber column 64 combines with the outlet line 60 for the bromine containing composition to the recycle line 26 leading into the reactor 12.

During the operation of the plant 10, natural gas including hydrogen sulfide as sulfur containing compound is fed via inlet line 24 and a composition including bromine, hydrogen bromide and water is fed via the recycle line 26 into the reactor 12 so as to form therein the starting stream, which is reacted in the reactor 12 to a reaction mixture effluent comprising sulfuric acid, hydrogen bromide, unreacted bromine and water as well as methane, ethane and carbon dioxide deriving from the natural gas. The reaction mixture effluent is withdrawn from the reactor 12 via the outlet line 30, wherein a portion thereof is recycled via line 28 into the reactor 12 and the remaining portion is fed into the separation vessel 14. The reaction mixture effluent separates in the separation vessel 14 into a gaseous portion of the reaction mixture effluent and into a liquid portion of the reaction mixture effluent. While the gaseous portion of the reaction mixture effluent exits the separation vessel 14 via the outlet line 32, the liquid portion of the reaction mixture effluent exits the separation vessel 14 via the outlet line 34. The liquid portion of the reaction mixture effluent combines, before entering the first distillation column 16, with the sulfuric acid enriched composition deriving from the bottom outlet line 50 of the third distillation column 20 and led to the line 34 through the recycle line 38 so as to increase the sulfuric acid concentration in the liquid portion of the reaction mixture effluent sufficiently high to break the hydrogen bromide-water azeotrope therein, thus allowing to efficiently separate in the first distillation column 16 hydrogen bromide in the gas phase and water in the liquid phase. The water and sulfuric acid enriched bottom composition produced in the first distillation column 16 is withdrawn from the first distillation column 16 via the bottom outlet line 42 and is introduced into the second distillation column 18, in which the water and sulfuric acid enriched bottom composition of the first distillation column 16 is separated into a water enriched overhead composition and into a sulfuric acid enriched bottom composition. The so produced sulfuric acid enriched bottom composition is withdrawn from the second distillation column 20 via the bottom outlet line 46 and is then fed into the third distillation column 20 and is separated therein into a pure water overhead composition comprising more than 99.9% by weight of water and into a concentrated sulfuric acid bottom composition comprising at least 95% by weight of sulfuric acid. The so produced concentrated sulfuric acid bottom composition is withdrawn from the third distillation column 20 via the outlet line 50. While a portion of the concentrated sulfuric acid composition is recycled via the recycle line 38 into the liquid portion of the reaction mixture effluent led through line 34, the remaining portion of the concentrated sulfuric acid composition is withdrawn from the plant 12 via the sulfuric acid product outlet line 52.

The hydrogen bromide enriched composition obtained as overhead composition in the first distillation column 16 is fed via the overhead outlet line 40 of the first distillation column 16 into the vessel 54, in which the hydrogen bromide enriched composition is partially condensed and thus separated into a liquid water enriched composition being withdrawn from the vessel via the liquid outlet line 56 and into a gaseous hydrogen bromide-rich, water depleted composition comprising less than 1% by weight of water being withdrawn from the vessel via the outlet line 58. While the gaseous portion of hydrogen bromide enriched composition is fed via the line 58 into the electrolysis cell 22 in order to conduct the electrolysis of step d) therein, the liquid portion of hydrogen bromide enriched composition is not subjected to any electrolysis and thus bypasses the electrolysis cell 22, but is led into the recycle line 26. Optionally, a portion of the liquid water enriched composition leaving vessel 54 is fed back to the top of the distillation column 16 as liquid reflux. The hydrogen bromide enriched composition is electrolysed in the electrolysis cell 22 into hydrogen and a bromine containing composition. While the hydrogen is withdrawn from the electrolysis cell 22 via the outlet line 62 and removed as product from the plant, the bromine containing composition is withdrawn from the electrolysis cell 22 via the outlet line 60 and is combined with the aqueous composition obtained in the scrubber column 64 as bottom composition. The so obtained combined stream is led via the recycle line 26, into which the liquid portion of the hydrogen bromide enriched composition obtained in vessel 54, which bypasses the electrolysis cell 22, is led through line 56, into the reactor 12.

The gaseous portion of the reaction mixture effluent exiting the separation vessel 14 via the outlet line 32 is subjected in the scrubber column 64 to a scrubbing step with water so as to obtain a gaseous composition containing less than 10 ppm of sum of bromine and hydrogen bromide, which is withdrawn from the scrubber column 64 via the gas outlet line 81, as well as an aqueous composition containing 5 to 40% by weight of hydrogen bromide, which is withdrawn from the scrubber column 64 via the liquid outlet line 82 and which is then combined with the bromine containing composition exiting the electrolysis cell via the outlet line 60.

The overhead composition of the third distillation column 20, which is withdrawn from the third distillation column 20 via the outlet line 48, is degassed in the vessel 78 and the so obtained degassed pure water is led through line 68 and combined with the water inlet line 66 leading to the scrubber column 64. Finally, the gas, from which the sulfur containing compound(s) is/are removed, is withdrawn from the plant via the gas outlet line 86.

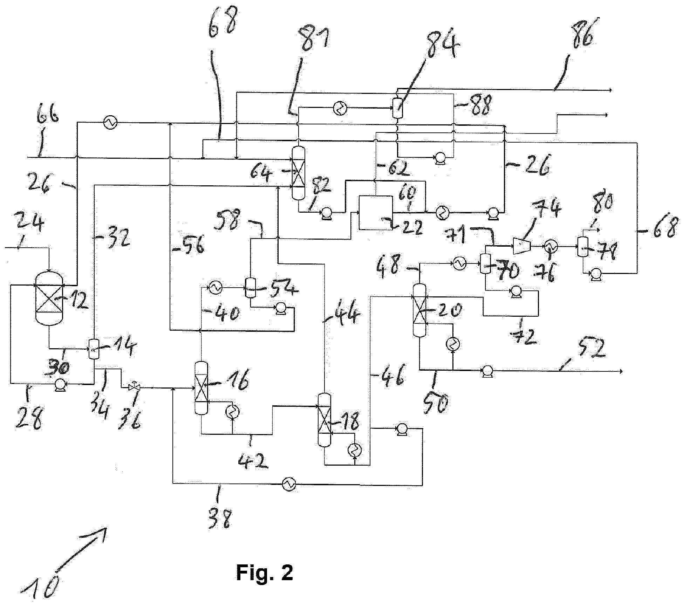

The plant 10 shown in figure 2 is identical to that shown in figure 1 except that the liquid portion of the reaction mixture effluent being withdrawn from the vessel 14 via outlet line 34 is not combined with the sulfuric acid enriched composition being obtained as bottom composition in the third distillation column 20, but is combined with the sulfuric acid enriched composition being obtained as bottom composition in the second distillation column 18 and which is led into line 34 via the recycle line 38.

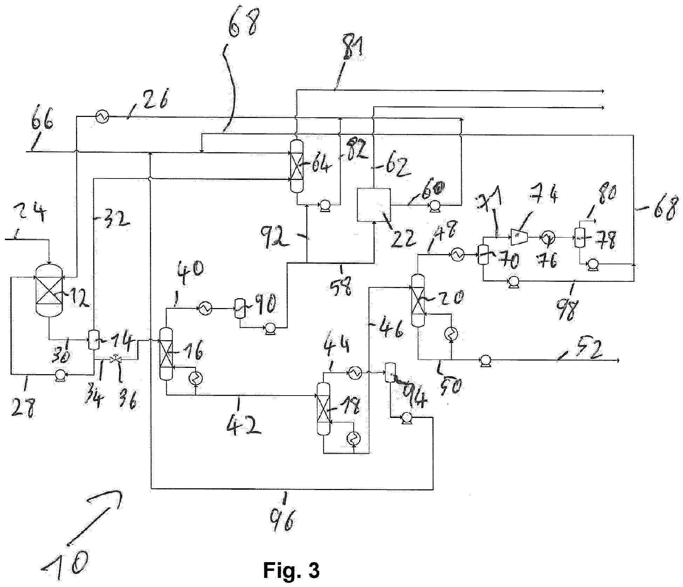

The plant 10 shown in figure 3 uses in difference to the plant 10 shown in figures 1 and 2 a liquid phase electrolysis. The plant 10 shown in figure 3 differs from that shown in figure 1 in that the overhead outlet line 40 of the first distillation column 40 does not lead into a vessel 54 and is not separated therein into a liquid water enriched composition and into a gaseous hydrogen bromide-rich, water depleted composition. On the contrary, the overhead outlet line 40 of the first distillation column 40 leads into a condenser 90, in which the overhead composition obtained in the first distillation column 16, which comprises up to about 50% by weight of hydrogen bromide and up to 50% by weight of water, is condensed to a liquid. A portion of the so obtained liquid is then fed via line 58 into the electrolysis cell 22, whereas the remaining portion of the liquid is led via the bypass line 92 into the outlet line for the aqueous composition of the scrubber column 64. In a further difference to the plant 10 shown in figure 1, the overhead outlet line 44 of the second distillation column 18 of the plant 10 shown in figure 3 is not combined with line 32 for the gaseous portion of the reaction mixture effluent. On the contrary, the overhead outlet line 44 of the second distillation column 18 of the plant 10 shown in figure 3 leads into a condenser 94, in which the water enriched overhead composition obtained in the second distillation column 18 is condensed to liquid, which is then led via liquid line 96 into the water inlet line 66 of the scrubber column 64. In still a further difference to the plant 10 shown in figure 1, the liquid portion obtained in the vessel 70 from the overhead composition being withdrawn from the third distillation column 20 via line 48 is not recycled via a liquid recycle line 72 into the third distillation column. On the contrary, the liquid portion obtained in the vessel 70 from the overhead composition of the third distillation column 20 is led via liquid line 98 and is combined with the liquid portion of water being obtained in vessel 78, wherein the so obtained pure water mixture is led via the recycle line 68 into the water inlet line 66 of the scrubber column 64. In yet a further difference to the plant 10 shown in figure 1, the gaseous composition obtained in the scrubber column 64 is not led to a vessel 84. On the contrary, the gaseous composition obtained and leaving the scrubber column 64 via line 81 is withdrawn via line 81 from the plant 10. In a last difference to the plant 10 shown in figure 1, the plant 10 shown in figure 3 does not comprise any recycle line 38 for recycling a sulfuric acid enriched composition and combining it with the liquid portion of the reaction mixture effluent being withdrawn from the vessel 14 via line 34.

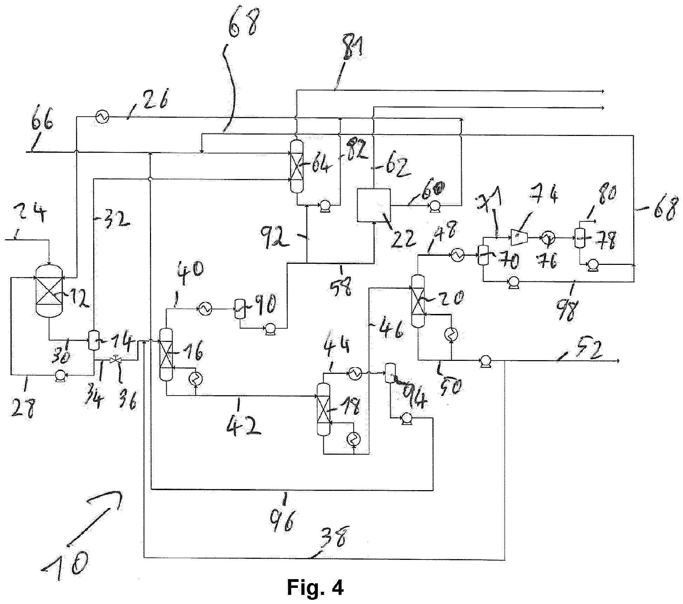

The plant 10 shown in figure 4 is identical to that shown in figure 3 except that the plant 12 comprises a recycle line 38 for recycling a portion of the sulfuric acid enriched bottom composition obtained in the third distillation column 20 and combining it with the liquid portion of the reaction mixture effluent being withdrawn from the vessel 14 via line 34, before the so obtained mixture is led into the first distillation column 16.

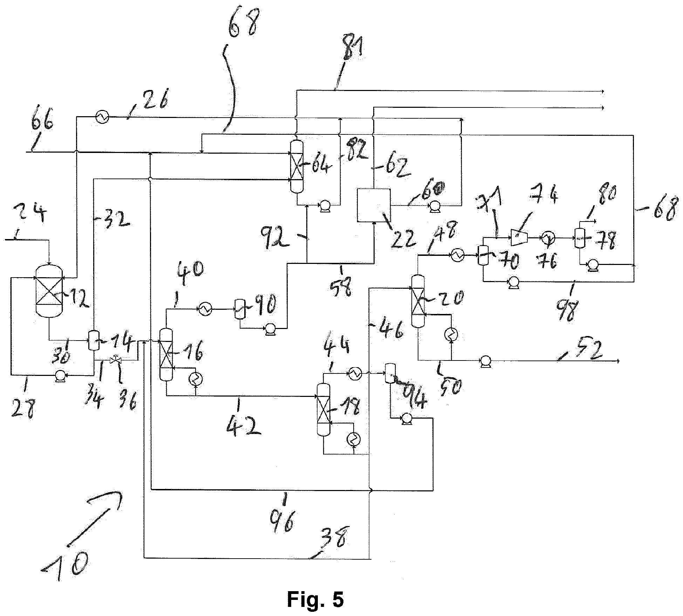

The plant 10 shown in figure 5 is identical to that shown in figure 3 except that the plant 12 comprises a recycle line 38 for recycling a portion of the sulfuric acid enriched bottom composition obtained in the second distillation column 18 and combining it with the liquid portion of the reaction mixture effluent being withdrawn from the vessel 14 via line 34, before the so obtained mixture is led into the first distillation column 16.

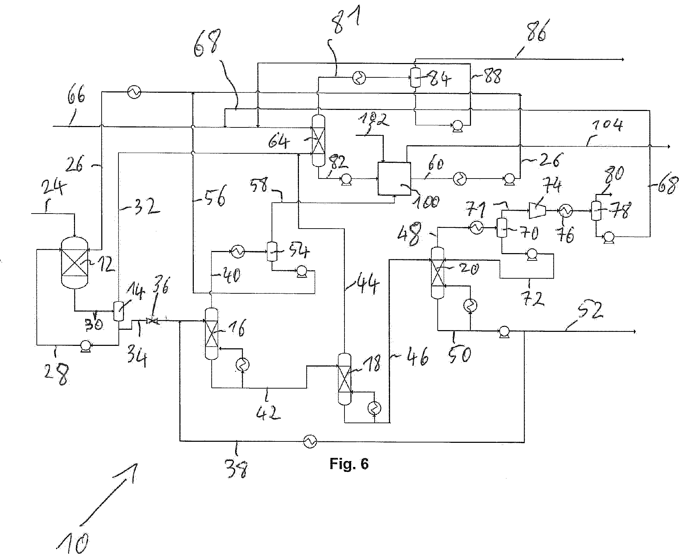

The plant 10 shown in figure 6 is identical to that shown in figure 1 except that the treatment of step d) is not performed as electrolysis, but as thermal oxidation. Thus, the plant 10 of figure 6 does not comprise an electrolysis cell 22, but instead thereof a thermal oxidizer 100, which is connected with line 82 for the aqueous phase coming from the scrubber 64, with line 58 for the gaseous hydrogen bromide enriched composition coming from the vessel 54, with an inlet line 102 for oxygen or air, with the outlet line 60 for bromine containing composition and with a vent gas outlet line 104. During the operation of the plant 10, hydrogen bromide enriched composition coming from the vessel 54, aqueous phase coming from the scrubber 64 and air or oxygen are reacted in the thermal oxidizer 100 to the bromine and water containing composition, which is withdrawn from the thermal oxidizer 100 via the outlet line 60 and recycled into the reactor 12 via the recycle line 26. In the embodiment shown in figure 6, the recycle line 38 leads from the bottom outlet line 50 of the third distillation column 20 to the outlet line 34 of the liquid portion of the reaction mixture effluent. However, instead thereof, the recycle line 38 may lead from the bottom outlet line 46 of the second distillation column 18 to the outlet line 34 of the liquid portion of the reaction mixture effluent.

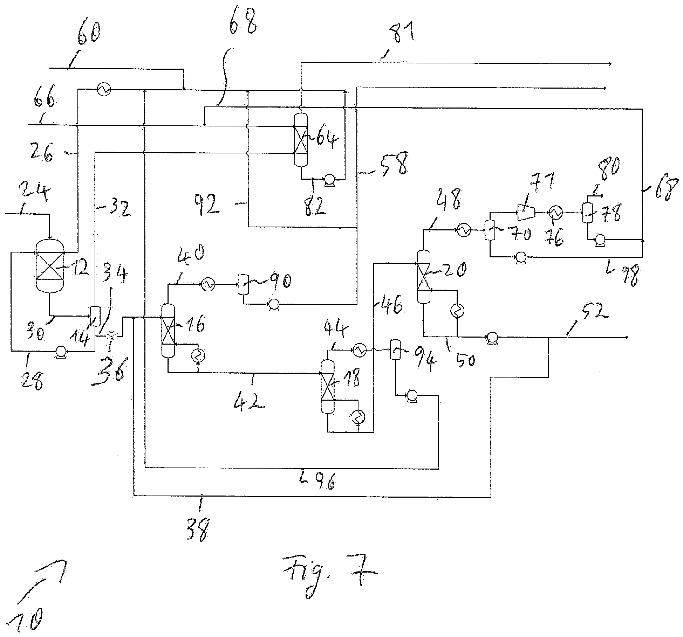

The plant 10 shown in figure 7 is identical to that shown in figure 4 except that the treatment of step d) is not performed in the plant, but in an external unit, such as for instance an external electrolysis cell. Thus, the plant 10 of figure 7 does not comprise an electrolysis cell 22. On the contrary, the line 58 for the condensed hydrogen bromide enriched composition withdrawn as overhead composition via line 40 from the first distillation column 16 leads to an external electrolysis cell, from which a line 60 for bromine containing composition leads back into the plant 10 into the recycle line 26. In further differences to the plant 10 shown in figure 3, the bypass line 92 leads into the recycle line 26 and also the outlet line 82 of the scrubber 26 leads into the recycle line 26.

### Reference Numeral List

- 10: Plant
- 12: Reactor
- 14: Separation vessel
- 16: First distillation column
- 18: Second distillation column
- 20: Third distillation column
- 22: Electrolysis cell
- 24: Inlet line for natural gas
- 26: Recycle line for a bromine, hydrogen bromide and water containing composition
- 28: Recycle line for liquid portion of the reaction mixture effluent
- 30: Outlet line reaction mixture effluent
- 32: Outlet line for the gaseous portion of the reaction mixture effluent
- 34: Outlet line for the liquid portion of the reaction mixture effluent
- 36: Throttle
- 38: Recycle line for a sulfuric acid enriched composition
- 40: Overhead outlet line of the first distillation column
- 42: Bottom outlet line of the first distillation column
- 44: Overhead outlet line of the second distillation column
- 46: Bottom outlet line of the second distillation column
- 48: Overhead outlet line of the third distillation column
- 50: Bottom outlet line of the third distillation column
- 52: Outlet line for sulfuric acid product
- 54: Vessel
- 56: Liquid outlet line
- 58: Outlet line
- 60: Outlet line for a bromine containing composition
- 62: Outlet line for hydrogen
- 64: Scrubber column
- 66: Inlet line for water
- 68: Recycle line for water
- 70: Vessel
- 71: Gas line
- 72: Liquid recycle line
- 74: Compressor
- 76: Heat exchanger
- 78: Vessel
- 80: Gas outlet line
- 81: Outlet line for a gaseous composition
- 82: Outlet line for an aqueous composition
- 84: Vessel
- 86: Gas outlet line
- 88: Recycle line
- 90: Condenser
- 92: Bypass line
- 94: Condenser
- 96: Liquid line
- 98: Liquid line
- 100: Thermal oxidizer
- 102: Inlet line for air/oxygen
- 104: Vent gas outlet line

## Claims

1. A process for removing at least a sulfur containing compound from gas containing at least one sulfur containing compound, wherein the process comprises the following steps:
a) contacting a gas stream containing at least one sulfur containing compound with a stream containing bromine and water so as to obtain a starting stream,
b) reacting the starting stream provided in step a) so as to produce a reaction mixture effluent comprising sulfuric acid and hydrogen bromide,
c) separating the reaction mixture effluent obtained in step b) into one or more hydrogen bromide enriched compositions and into one or more sulfuric acid enriched compositions,
d) subjecting at least a portion of the at least one hydrogen bromide enriched composition obtained in step c) to a treatment, in which at least a portion of the hydrogen bromide enriched composition is converted to bromine,
e) recycling at least a portion of the bromine containing composition obtained in step d) back to step a), and
f) withdrawing gas, which is depleted in the at least one sulfur containing compound.

2. The process in accordance with claim 1, wherein the sulfur containing compound contained in the gas is selected from the group consisting of sulfur, sulfides, disulfides, thiophenes, thiols and arbitrary combinations of two or more of the aforementioned compounds and is more preferably selected from the group consisting of hydrogen sulfide, sulfur, sulfur dioxide, carbon disulfide, carbonyl sulfide, methanethiol, organic sulfides and arbitrary combinations of two or more of the aforementioned compounds.

3. The process in accordance with claim 1 or 2, wherein the starting stream provided in step a) further contains hydrogen bromide, and wherein the process further comprises a step of recycling at least a portion of hydrogen bromide contained in one of the one or more hydrogen bromide enriched compositions produced in step c) to step a), wherein the recycled hydrogen bromide has not been subjected to a treatment of step d).

4. The process in accordance with any of the preceding claims, wherein in step a) a gas, which contains a sulfur containing compound, is mixed with the bromine, hydrogen bromide and water, wherein the gas, which contains a sulfur containing compound, is preferably selected from the group consisting of biogases, natural gases, flue gases, combustion gases from sulfur compounds, tail gases and arbitrary combinations of two or more of the aforementioned gases.

5. The process in accordance with any of the preceding claims, wherein the starting stream comprises at least 5% by weight, preferably 11 to 46% by weight and more preferably 12 to 46% by weight of hydrogen bromide, at least 1% by weight and preferably 2 to 35% by weight of bromine and 40 to 75% by weight of water based on the total weight of water, bromine and hydrogen bromide in the liquid phase of the starting stream, if the starting stream is at the reaction temperature and reaction pressure a gas-liquid mixture, and wherein the starting stream comprises at least 5% by weight, preferably 11 to 46% by weight and more preferably 12 to 46% by weight of hydrogen bromide, at least 1% by weight and preferably 2 to 35% by weight of bromine and 30 to 75% by weight of water based on the total weight of the starting stream, if the starting stream is at the reaction temperature and reaction pressure a liquid.

6. The process in accordance with any of the preceding claims, wherein the reaction mixture effluent is a gas-liquid mixture and is fed in step c) into a vessel and is allowed to phase separate therein or is subjected to at least one separation step being selected from the group consisting of stripping steps, absorption steps, extraction steps and arbitrary combinations of two or more of the aforementioned separation steps, so as to separate the reaction mixture effluent into a gaseous portion of the reaction mixture effluent and into a liquid portion of the reaction mixture effluent, wherein the liquid portion of the reaction mixture effluent comprises at least 20% by weight and preferably 25 to 50% by weight of hydrogen bromide relative to the water content of the liquid portion of the reaction mixture effluent, and wherein the liquid portion of the reaction mixture effluent comprises at least 0.1% by weight and preferably 0.3 to 15% by weight of sulfuric acid, 20 to 70% by weight and preferably 25 to 65% by weight of water and at most 2% by weight and preferably at most 0.5% by weight of bromine, based on the total weight of the liquid portion of the reaction mixture effluent.

7. The process in accordance with any of the preceding claims, wherein the treatment of step d) is an electrolysis, a thermal oxidation or another conversion step converting at least a portion of the hydrogen bromide contained in the hydrogen bromide enriched composition to bromine being performed off-site.

8. The process in accordance with any of the preceding claims, wherein step c) comprises at least one distillation step, preferably at least two distillation steps and more preferably three distillation steps, wherein the reaction mixture effluent is fed in step c) into a vessel and is allowed to phase separate therein or is subjected to at least one separation step being selected from the group consisting of stripping steps, absorption steps, extraction steps and arbitrary combinations of two or more of the aforementioned separation steps, so as to separate the reaction mixture effluent into a gaseous portion of the reaction mixture effluent and into a liquid portion of the reaction mixture effluent, whereafter the liquid portion of the reaction mixture effluent or a mixture of the liquid portion of the reaction mixture effluent and a sulfuric acid enriched composition obtained in step c) is subjected as feed to a first distillation step, wherein the feed is separated in the first distillation step into a gaseous overhead composition of a hydrogen bromide enriched composition containing at most 1,000 ppm of sulfuric acid and into a liquid bottom composition of a sulfuric acid enriched composition containing more than 30% by weight of sulfuric acid and less than 1,000 ppm of hydrogen bromide.

9. The process in accordance with claim 8, wherein at least a portion of the gaseous hydrogen bromide enriched composition obtained in the first distillation step as overhead composition i) is condensed and is subjected in step d) to an electrolysis or ii) is subjected to a water removal step so as to separate the hydrogen bromide enriched composition into a water enriched composition and into a gaseous hydrogen bromide-rich, water depleted composition comprising 90 to 99% by weight of hydrogen bromide and less than 10% by weight and preferably less than 1% by weight of water, wherein at least a portion of the gaseous hydrogen bromide-rich, water depleted composition is subjected in step d) to an electrolysis or to a thermal oxidation step, wherein preferably at least a portion of the gaseous hydrogen bromide-rich, water depleted composition is mixed with oxygen or an oxygen containing gas and reacted at a temperature of at least 700°C to bromine and water, or iii) is led to an off-site unit preferably comprising a thermal oxidation unit or an electrolysis cell for a hydrogen bromide electrolysis, in which at least a portion of the hydrogen bromide enriched composition is converted to a bromine containing composition by converting at least a portion of the hydrogen bromide into bromine, before at least a portion of the produced bromine containing composition is recycled in step e) to step a).

10. The process in accordance with any of claims 8 or 9, wherein the sulfuric acid enriched composition obtained as liquid bottom composition of the first distillation step is subjected to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein at least a portion of the bottom composition of the second distillation step is preferably subjected to a third distillation step so as to produce an overhead composition containing at least 99.0% by weight, more preferably at least 99.5% by weight and even more preferably at least 99.9% by weight of water and less than 10 ppm, preferably less than 5 ppm and more preferably less than 1 ppm of hydrogen bromine and a bottom composition containing at least 90% by weight and preferably at least 94% by weight of sulfuric acid and less than 10% by weight and preferably less than 6% by weight of water based on the total weight of the bottom composition, wherein preferably a portion of the bottom composition obtained in the second distillation step and/or a portion of the bottom composition obtained in the third distillation step is recycled to and mixed as sulfuric acid enriched composition with the reaction mixture effluent or with the liquid portion of the reaction mixture effluent so as to obtain a mixture containing at least 35% by weight and preferably 50 to 70% by weight of sulfuric acid based on the total wight of the mixture and subjected the mixture as feed to the first distillation step.

11. The process in accordance with any of the preceding claims, which comprises:
i) feeding the reaction mixture effluent in step c) into a vessel and allowing it to phase separate therein so as to separate the reaction mixture effluent into a gaseous portion of the reaction mixture effluent and into a liquid portion of the reaction mixture effluent,
ii) subjecting a mixture of the liquid portion of the reaction mixture effluent and a sulfuric acid enriched composition obtained in step c) as feed to a first distillation step so as to separate the feed into an overhead composition of a hydrogen bromide enriched composition containing at most 1,000 ppm of sulfuric acid and into a bottom composition of a sulfuric acid enriched composition containing more than 30% by weight of sulfuric acid and less than 1,000 ppm of hydrogen bromide, wherein the feed preferably contains at least 53% by weight relative of sulfuric acid relative to the water concentration,
iii) subjecting at least a portion of the hydrogen bromide enriched composition obtained in the first distillation step as overhead composition to a water removal step so as to separate the hydrogen bromide enriched composition into a water enriched composition and into a gaseous hydrogen bromide-rich, water depleted composition comprising 90 to 99% by weight of hydrogen bromide and less than 10% by weight and preferably less than 1% by weight of water, and subjecting at least a portion of the gaseous hydrogen bromide-rich, water depleted composition in step d) to an electrolysis or to a thermal oxidation,
iv) subjecting the sulfuric acid enriched composition obtained as bottom composition of the first distillation step to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein preferably at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition,
v) recycling and mixing a portion of the bottom composition obtained in the second distillation step and/or a portion of the bottom composition obtained in the third distillation step as sulfuric acid enriched composition with the liquid portion of the reaction mixture effluent so as to produce the mixture of the liquid portion of the reaction mixture effluent and a sulfuric acid enriched composition used in step ii),
vi) recycling at least a portion of the bromine containing composition obtained in the electrolysis to step a) and
vii) optionally, either recycling the gaseous portion of the reaction mixture effluent or a mixture of the gaseous portion of the reaction mixture effluent and the overhead composition of the second distillation step to step a) or subjecting the gaseous portion of the reaction mixture effluent or a mixture of the gaseous portion of the reaction mixture effluent and the overhead composition of the second distillation step to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a).

12. The process in accordance with any of claims 1 to 11, which comprises:
i) feeding the reaction mixture effluent in step c) into a vessel and allowing it to phase separate therein so as to separate the reaction mixture effluent into a gaseous portion of the reaction mixture effluent and into a liquid portion of the reaction mixture effluent,
ii) subjecting the liquid portion of the reaction mixture effluent or a mixture of the liquid portion of the reaction mixture effluent and a sulfuric acid enriched composition obtained in step c) as feed to a first distillation step so as to separate the feed into an overhead composition of a hydrogen bromide enriched composition containing at most 1,000 ppm of sulfuric acid and into a bottom composition of a sulfuric acid enriched composition containing more than 30% by weight of sulfuric acid and less than 1,000 ppm of hydrogen bromide,
iii) condensing at least a portion of the hydrogen bromide enriched composition obtained in the first distillation step as overhead composition and subjecting at least a portion of the condensed portion in step d) to an electrolysis,
iv) subjecting the sulfuric acid enriched composition obtained as bottom composition of the first distillation step to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein preferably at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition,
v) optionally, recycling and mixing a portion of the bottom composition obtained in the second distillation step and/or a portion of the bottom composition obtained in the third distillation step as sulfuric acid enriched composition with the liquid portion of the reaction mixture effluent so as to produce the mixture of the liquid portion of the reaction mixture effluent and a sulfuric acid enriched composition used in step ii),
vi) recycling at least a portion of the bromine containing composition obtained in the electrolysis to step a),
vii) optionally, either recycling the gaseous portion of the reaction mixture effluent to step a) or subjecting the gaseous portion of the reaction mixture effluent to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a), and
viii) optionally, recycling a portion of the condensed portion of the hydrogen bromide enriched composition obtained in step iii), without subjecting it to the electrolysis in step d), to step a).

13. The process in accordance with any of the preceding claims, wherein in step d) an electrolysis is performed by using an electrolytic cell comprising an anode, a cathode and a membrane sandwiched between the anode and the cathode, wherein the hydrogen bromide enriched composition containing at most 1,000 ppm of sulfuric acid obtained in step c) is fed to the anode, optionally a second composition comprising hydrogen bromide and water is fed to the cathode, and the electrolytic cell is operated to produce hydrogen at the cathode, wherein the bromine containing composition is produced at the anode, wherein the membrane is made of a fluoropolymer having a glass transition temperature of at least 110°C.

14. The process in accordance with claim 13, wherein the electrolysis cell is operated at an operational temperature of at least 70°C and preferably at an operational temperature of 70°C to 122°C, wherein preferably the electrolytic cell is operated at an operational pressure, which increases from the anode to the cathode.

15. A plant for producing hydrogen comprising:
a) a reactor comprising one or more inlet lines and an outlet line for a reaction mixture effluent,
b) a vessel comprising an inlet line being connected with the outlet line for the reaction mixture effluent, wherein the vessel further comprises an outlet line for the gaseous portion of the reaction mixture effluent and an outlet line for the liquid portion of the reaction mixture effluent, wherein the outlet line for the gaseous portion of the reaction mixture effluent is directly or indirectly connected with an inlet line of the reactor,
c) a first distillation column comprising an inlet line being connected with the outlet line for the liquid portion of the reaction mixture effluent, wherein the first distillation column comprises an overhead outlet line for a gaseous hydrogen bromide enriched composition and a bottom outlet line for sulfuric acid enriched composition,
d₁) an electrolysis cell comprising an anode, a cathode and a membrane sandwiched between the anode and the cathode as well as an inlet line for a hydrogen bromide containing composition, an outlet line for hydrogen and an outlet line for a bromine containing composition, wherein the inlet line of the electrolysis cell is connected with the outlet line for the hydrogen bromide enriched composition of the first distillation column i) either directly or ii) via a condenser being arranged therebetween comprising an inlet line being connected with the overhead outlet line for the gaseous hydrogen bromide enriched composition of the first distillation column and comprising an outlet line being connected with the inlet line for a hydrogen bromide containing composition of the electrolysis cell or iii) via a vessel being arranged therebetween comprising an inlet line being connected with the overhead outlet line for the gaseous hydrogen bromide enriched composition of the first distillation column, comprising a liquid outlet line and comprising a gas outlet line, with the gas outlet line being connected with the inlet line of the electrolysis cell, and wherein the outlet line for the bromine containing composition of the electrolysis cell is directly or indirectly connected with an inlet line of the reactor, or
d₂) a thermal oxidizer, or
d₃) an off-site conversion unit for converting at least a portion of the hydrogen bromide contained in the hydrogen bromide enriched composition to bromine,
e) a second distillation column comprising an inlet line being connected with the bottom outlet line for the sulfuric acid enriched composition of the first distillation column, wherein the second distillation column comprises an overhead outlet line for a hydrogen bromide enriched composition and a bottom outlet line for sulfuric acid enriched composition, and
f) optionally, a third distillation column comprising an inlet line being connected with the bottom outlet line for the sulfuric acid enriched composition of the second distillation column, wherein the third distillation column comprises an overhead outlet line for a water enriched composition and a bottom outlet line for sulfuric acid product composition.
